(19) Europäisches Patentamt
European Patent Office
Office européen des brevets

(11) **EP 4 386 938 A1**

(12) **EUROPEAN PATENT APPLICATION**
published in accordance with Art. 153(4) EPC

(43) Date of publication:
**19.06.2024 Bulletin 2024/25**

(21) Application number: **22911700.7**

(22) Date of filing: **07.12.2022**

(51) International Patent Classification (IPC):
**H01M 10/613** $^{(2014.01)}$     **H01M 10/617** $^{(2014.01)}$
**H01M 10/643** $^{(2014.01)}$

(52) Cooperative Patent Classification (CPC):
**H01M 10/613; H01M 10/617; H01M 10/643;**
Y02E 60/10

(86) International application number:
**PCT/KR2022/019844**

(87) International publication number:
**WO 2023/121067 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.12.2021 KR 20210187839**

(71) Applicant: **LG Energy Solution, Ltd.**
**Seoul 07335 (KR)**

(72) Inventors:
• **OH, Kwang-Keun**
**Daejeon 34122 (KR)**
• **YANG, Jin-Oh**
**Daejeon 34122 (KR)**
• **JUNG, In-Hyuk**
**Daejeon 34122 (KR)**
• **CHOI, Hae-Won**
**Daejeon 34122 (KR)**

(74) Representative: **Plasseraud IP**
**66, rue de la Chaussée d'Antin**
**75440 Paris Cedex 09 (FR)**

(54) **BATTERY PACK AND VEHICLE COMPRISING SAME**

(57)     A battery pack according to an embodiment of the present disclosure includes a plurality of battery cells, a cooling unit disposed between the plurality of battery cells along a lengthwise direction of the battery pack, and a side structure unit accommodating the cooling unit and the plurality of battery cells, wherein the battery cells, the cooling unit and the side structure unit are arranged at a preset distance ratio for close contact with each other.

FIG. 21

EP 4 386 938 A1

## Description

### TECHNICAL FIELD

The present disclosure relates to a battery pack and a vehicle comprising the same.

The present application claims the benefit of Korean Patent Application No. 10-2021-0187839 filed on December 24, 2021 with the Korean Intellectual Property Office, the disclosure of which is incorporated herein by reference in its entirety.

### BACKGROUND ART

Due to their characteristics of being easily applicable to various products and electrical properties such as high energy density, secondary batteries are commonly used not only in portable devices, but also in electric vehicles (EVs) or hybrid electric vehicle (HEVs) that operate by an electrical driving source. For their primary advantage of remarkably reducing the use of fossil fuels and not generating by-products from the use of energy, secondary batteries are gaining attention as a new source of energy for eco-friendliness and energy efficiency.

The types of secondary batteries widely used at present include lithium ion batteries, lithium polymer batteries, nickel cadmium batteries, nickel hydrogen batteries, nickel zinc batteries or the like. This unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when forming the battery pack by connecting the plurality of battery cells in series/in parallel, it is general to make a battery module including at least one battery cell, and then make a battery pack or a battery rack using at least one battery module with an addition of any other component.

In general, the conventional battery pack includes a plurality of battery cells and a cell frame accommodating the plurality of battery cells. In general, the conventional cell frame includes an assembly of plates including a front plate, a rear plate, a side plate, a lower plate and an upper plate to accommodate the plurality of battery cells and ensure the strength.

However, due to the structural characteristics of the cell frame including the assembly of plates, the conventional battery pack has high manufacturing cost and complex assembly process, and thus there are price competitiveness and fabrication efficiency disadvantages.

Furthermore, due to the structure of the cell frame including the assembly of plates, the conventional battery pack has an increase in its total size and thus there is an energy density disadvantage.

Moreover, since the conventional battery pack includes a cooling unit to cool the battery cells, the battery pack has low total energy density and degradation in cooling performance or cooling efficiency due to interferences between the cooling unit and the plurality of plates.

### DISCLOSURE

#### Technical Problem

Accordingly, the present disclosure is directed to providing a battery pack with high energy density and optimal cooling performance and a vehicle comprising the same.

#### Technical Solution

To solve the above-described problem, the present disclosure provides a battery pack including a plurality of battery cells; a cooling unit disposed between the plurality of battery cells along a lengthwise direction of the battery pack; and a side structure unit accommodating the cooling unit and the plurality of battery cells, wherein the battery cells, the cooling unit and the side structure unit are arranged at a preset distance ratio for close contact with each other.

Preferably, the side structure unit may include a first cell accommodation portion and a second cell accommodation portion, wherein the first cell accommodation portion and the second cell accommodation portion have a concave shape and are arranged in a staggering manner, and a distance between centers of the battery cells between the first cell accommodation portion and the second cell accommodation portion may be determined according to a thickness of the side structure unit.

Preferably, the cooling unit may include a cooling tube disposed between the plurality of battery cells; and a cooling channel disposed in the cooling tube to circulate a cooling fluid for cooling the battery cells, and a distance between centers of the adjacent battery cells in contact with one surface of the cooling tube may be determined based on a distance between centers of the battery cells disposed opposite with the cooling tube interposed therebetween.

Preferably, the distance between the centers of the battery cells disposed opposite with the cooling tube interposed therebetween may be a distance reflecting a thickness of the cooling tube.

Preferably, the distance between the centers of the battery cells between the first cell accommodation portion and the second cell accommodation portion, the distance between the centers of the adjacent battery cells in contact with one surface of the cooling tube and the distance between the centers of the battery cells disposed opposite with the cooling tube interposed therebetween may be determined, taking into account a diameter of the battery cells, a thickness of the cooling tube and a contact angle between the battery cell and the cooling tube.

Preferably, the contact angle between the battery cell and the cooling tube may be 60°.

Preferably, a minimum thickness of the first cell accommodation portion and the second cell accommodation portion may be half of the distance between the battery cells between the first cell accommodation portion and the second cell accommodation portion.

Preferably, a predetermined gap space may be formed in the first cell accommodation portion and the second cell accommodation portion upon receiving the battery cells in the first cell accommodation portion and the second cell accommodation portion.

Preferably, the gap space may be formed at a remaining area except an innermost area of a concave shape of the first cell accommodation portion and the second cell accommodation portion upon receiving the battery cells in the first cell accommodation portion and the second cell accommodation portion.

Preferably, the battery cells may come into contact with an inner surface of the first cell accommodation portion and the second cell accommodation portion only at the innermost area of the concave shape.

Preferably, the gap space may be filled with a filler member.

The present disclosure further provides a vehicle including the battery pack according to the above-described embodiment, wherein a lengthwise direction of the at least one battery pack is perpendicular to a lengthwise direction of the vehicle so that the side structure unit protects the plurality of battery cells in an event of a front-end or rear-end collision of the vehicle.

Advantageous Effects

According to the various embodiments as described above, it is possible to provide a battery pack with high energy density and optimal cooling performance and a vehicle comprising the same.

DESCRIPTION OF DRAWINGS

The accompanying drawings illustrate exemplary embodiments of the present disclosure, and together with the detailed description of the present disclosure described below, serve to provide a further understanding of the technical aspects of the present disclosure, and thus the present disclosure should not be construed as being limited to the drawings.

FIG. 1 is a diagram illustrating a battery pack according to an embodiment of the present disclosure.
FIG. 2 is an exploded perspective view of the battery pack of FIG. 1.

FIG. 3 is a diagram illustrating a battery cell of the battery pack of FIG. 2.
FIG. 4 is a partial cross-sectional view showing the internal structure of the battery cell of FIG. 3.
FIG. 5 is a partial cross-sectional view showing the upper part structure of the battery cell of FIG. 3.
FIG. 6 is a partial cross-sectional view showing the lower part structure of the battery cell of FIG. 3.
FIG. 7 is a bottom view of the battery cell of FIG. 3.
FIG. 8 is a diagram illustrating a busbar assembly of the battery pack of FIG. 2.
FIG. 9 is a diagram illustrating a connection busbar unit of the busbar assembly of FIG. 8.
FIG. 10 is an exploded perspective view of the connection busbar unit of FIG. 9.
FIG. 11 is an enlarged diagram illustrating the main parts of the connection busbar unit of FIG. 9.
FIG. 12 is a diagram illustrating a cooling unit of the battery pack of FIG. 2.
FIG. 13 is an exploded perspective view of the cooling unit of FIG. 12.
FIG. 14 is a cross-sectional view of the cooling unit of FIG. 12.
FIG. 15 is a diagram illustrating a side structure unit of the battery pack of FIG. 2.
FIG. 16 is a diagram illustrating a main plate of the side structure unit of FIG. 15.
FIGS. 17 to 20 are diagrams illustrating a coupling structure of battery cells and cooling units through the side structure unit of FIG. 15.
FIGS. 21 and 22 are diagrams illustrating a placement relationship between battery cells and cooling units through the side structure unit of FIG. 15.
FIGS. 23 to 25 are diagrams illustrating a contact structure of the battery cells of FIG. 22 with the cooling units.
FIG. 26 is a diagram illustrating the lower surface of the side structure unit of FIG. 15 when coupling the side structure unit to battery cells.
FIG. 27 is an enlarged bottom view of the main parts of the side structure unit of FIG. 26.
FIG. 28 is a side view of the main parts of the side structure unit of FIG. 26.
FIGS. 29 to 31 are diagrams illustrating pack case structure formation through filler member injection of the battery pack of FIG. 2.
FIG. 32 is a diagram illustrating a battery pack according to another embodiment of the present disclosure.
FIG. 33 is an exploded perspective view of the battery pack of FIG. 32.
FIG. 34 is a diagram illustrating a busbar assembly of the battery pack of FIG. 33.
FIG. 35 is a diagram illustrating a high voltage busbar unit of the busbar assembly of FIG. 34.
FIG. 36 is a diagram illustrating a side structure unit of the battery pack of FIG. 33.
FIG. 37 is a diagram illustrating a main plate of the side structure unit of FIG. 36.

FIG. 38 is a diagram illustrating a placement relationship between battery cells and cooling units through the side structure unit of FIG. 36.

FIGS. 39 to 42 are diagrams illustrating a mounting structure of the side structure unit and a high voltage busbar unit of FIG. 36.

FIGS. 43 and 44 are diagrams illustrating filler member injection of the battery pack of FIG. 32.

FIG. 45 is a diagram illustrating a vehicle according to an embodiment of the present disclosure.

BEST MODE

The present disclosure will become apparent by describing an exemplary embodiment of the present disclosure in detail with reference to the accompanying drawings. The embodiment described herein is provided by way of illustration to help an understanding of the present disclosure, and it should be understood that various modifications may be made to the present disclosure in other embodiments than the embodiment described herein. Additionally, to help an understanding of the present disclosure, the accompanying drawings are not shown in true scale and may depict some exaggerated elements.

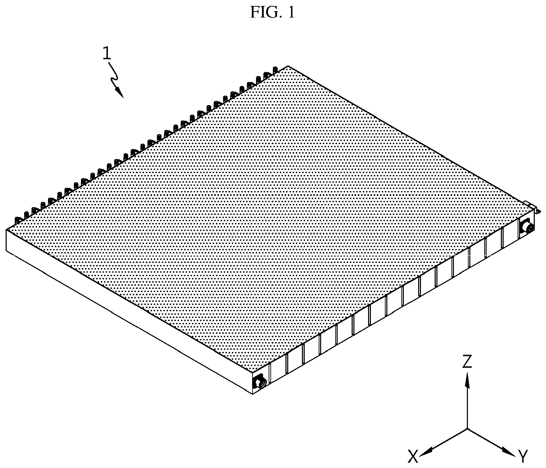

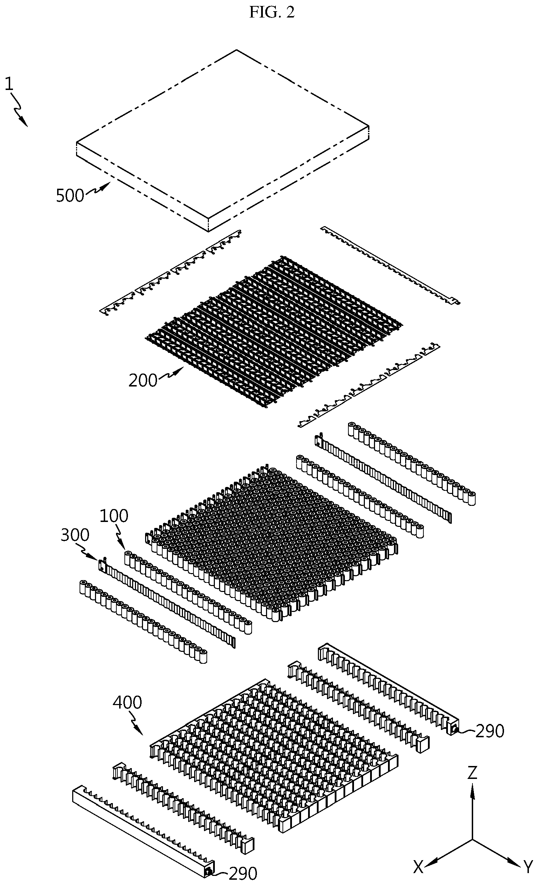

FIG. 1 is a diagram illustrating a battery pack according to an embodiment of the present disclosure, and FIG. 2 is an exploded perspective view of the battery pack of FIG. 1.

Referring to FIGS. 1 and 2, the battery pack 1 may be used as an energy source in an electric vehicle or a hybrid electric vehicle. Hereinafter, the battery pack 1 used in the electric vehicle will be described in more detail in the following related drawings.

The battery pack 1 may include a plurality of battery cells 100, a busbar assembly 200, a cooling unit 300, a side structure unit 400 and a filler member 500.

The plurality of battery cells 100 may include secondary batteries, for example, cylindrical secondary batteries, pouch type secondary batteries or prismatic secondary batteries. Hereinafter, this embodiment will be described based on cylindrical secondary batteries as the plurality of battery cells 100.

Hereinafter, each battery cell 100 will be described in more detail with reference to the following related drawings.

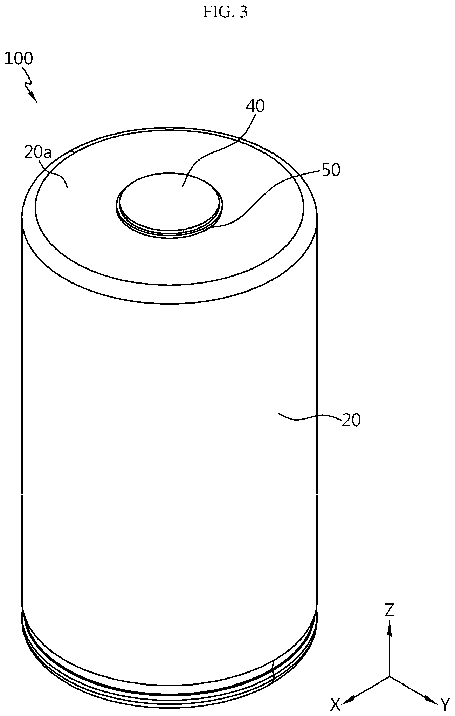

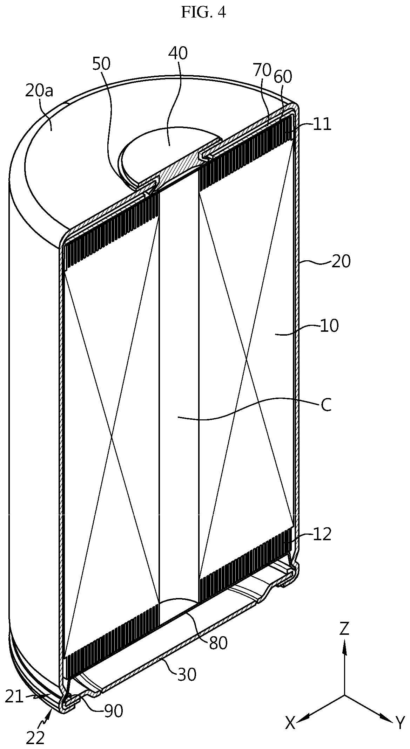

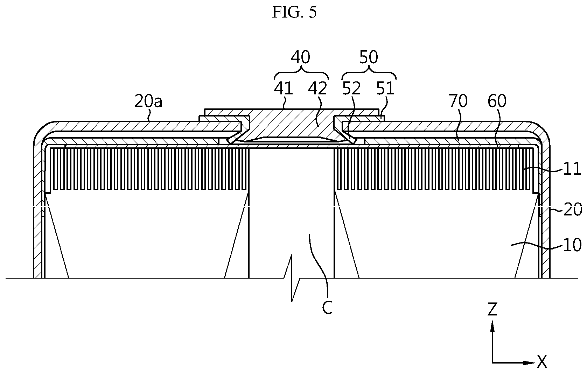

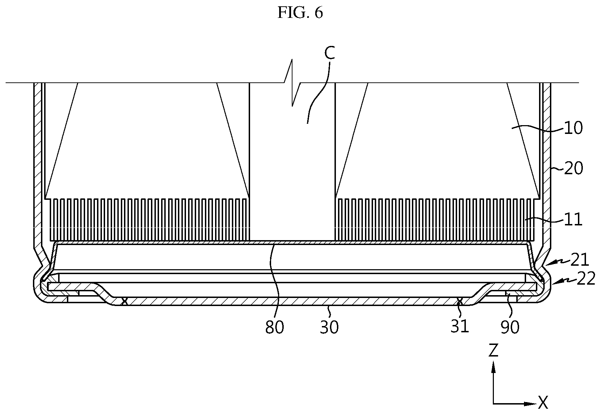

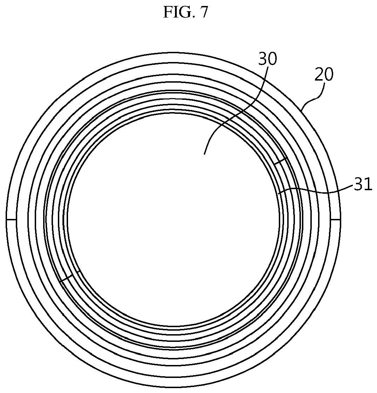

FIG. 3 is a diagram illustrating the battery cell of the battery pack of FIG. 2, FIG. 4 is a partial cross-sectional view showing the internal structure of the battery cell of FIG. 3, FIG. 5 is a partial cross-sectional view showing the upper part structure of the battery cell of FIG. 3, FIG. 6 is a partial cross-sectional view showing the lower part structure of the battery cell of FIG. 3, and FIG. 7 is a bottom view of the battery cell of FIG. 3.

Referring to FIGS. 3 to 7, the battery cell 100 includes an electrode assembly 10, a battery can 20, a cap plate 30 and a first electrode terminal 40. In addition to the above-described components, the battery cell 100 may further include an insulation gasket 50 and/or an upper current collector plate 60 and/or an insulation plate 70 and/or a lower current collector plate 80 and/or a sealing gasket 90.

The electrode assembly 10 includes a first electrode plate having a first polarity, a second electrode plate having a second polarity and a separator interposed between the first electrode plate and the second electrode plate. The first electrode plate is a positive or negative electrode plate, and the second electrode plate corresponds to an electrode plate having the opposite polarity to the first electrode plate.

The electrode assembly 10 may have, for example, a jelly-roll shape. That is, the electrode assembly 10 may be formed by winding a stack around a winding center C, the stack formed by stacking the first electrode plate, the separator and the second electrode plate at least once in that order. In this case, the separator may be disposed on the outer circumferential surface of the electrode assembly 10 for insulation from the battery can 20.

The first electrode plate includes a first electrode current collector and a first electrode active material coated on one or two surfaces of the first electrode current collector. An uncoated region exists, in which the first electrode active material is not coated, at one end of the first electrode current collector in the widthwise direction (parallel to the Z axis). The uncoated region acts as a first electrode tab. The first electrode tab 11 is disposed at the upper part of the heightwise direction (parallel to the Z axis) of the electrode assembly 10 received in the battery can 20.

The second electrode plate includes a second electrode current collector and a second electrode active material coated on one or two surfaces of the second electrode current collector. An uncoated region exists, in which the second electrode active material is not coated, at the other end of the second electrode current collector in the widthwise direction (parallel to the Z axis). The uncoated region acts as a second electrode tab. The second electrode tab 12 is disposed at the lower part of the heightwise direction (parallel to the Z axis) of the electrode assembly 10 received in the battery can 20.

The battery can 20 is a cylindrical container having an open portion on bottom, and is made of a metal having conductive properties. The side and the upper surface of the battery can 20 are integrally formed. The upper surface of the battery can 20 is approximately flat. The battery can 20 accommodates the electrode assembly 10 together with an electrolyte through the open portion on bottom.

The battery can 20 is electrically connected to the second electrode tab 12 of the electrode assembly 10. Accordingly, the battery can 20 has the same polarity as the second electrode tab 12.

The battery can 20 includes a beading portion 21 and a crimping portion 22 at the lower end. The beading portion 21 is disposed below the electrode assembly 10. The beading portion 21 is formed by beading the outer circumferential surface of the battery can 20. The beading portion 21 may prevent the electrode assembly 10 having a size corresponding to the width of the battery can 20 from slipping out of the open portion on bottom of the battery can 20, and may act as a support on which the cap plate 30 is seated.

The crimping portion 22 is disposed below the beading portion 21. The crimping portion 22 is extended and bent to cover the outer circumferential surface of the cap plate 30 disposed below the beading portion 21 and part of the lower surface of the cap plate 30.

The cap plate 30 is a component made of a metal having conductive properties, and covers the open portion on bottom of the battery can 20. That is, the cap plate 30 forms a lower surface of the battery cell 100. The cap plate 30 is seated on the beading portion 21 of the battery can 20 and secured by the crimping portion 22. The sealing gasket 90 may be interposed between the cap plate 30 and the crimping portion 22 of the battery can 20 to ensure the sealability of the battery can 20.

The cap plate 30 may further include a venting portion 31 to prevent the internal pressure rise caused by gas generation in the battery can 20. The venting portion 31 corresponds to an area of the cap plate 30 having a smaller thickness than the surrounding area. The venting portion 31 is structurally weaker than the surrounding area. Accordingly, when the internal pressure increases above a predetermined level due to a fault in the battery cell 100, the venting portion 31 ruptures to force gas generated in the battery can 20 out.

A hole may be formed in the upper surface of the battery can 20 in advance before placing the first electrode terminal 40 and the insulation gasket 50. The formation of the hole is not limited thereto and may be performed by any other method. For example, the hole may be formed by inserting the first electrode terminal 40, or the hole may be formed in advance with a different diameter or by notching or pre-notching the upper surface to insert the first electrode terminal 40. That is, the hole may be expanded to a desired size, or the hole may be formed in a small size by notching and then expanded to the desired size. Furthermore, any other method may be used to form the hole.

The battery cell 100 according to an embodiment of the present disclosure has a structure in which both the positive and negative terminals are present at the upper part, and thus the upper structure is more complicated than the lower structure. Accordingly, the cap plate 30 that forms the lower surface of the battery cell 100 may have the venting portion 31 for proper venting of gas generated in the battery can 20.

The venting portion 31 may be continuously formed in a circular pattern on the cap plate 30. The venting portion 31 is not limited thereto, and may be discontinuously formed in a circular pattern on the cap plate 30, and may be formed in a straight line pattern or any other pattern.

The first electrode terminal 40 is made of a metal having conductive properties, and is electrically connected to the first electrode tab 11 of the electrode assembly 10 through the upper surface of the battery can 20. Accordingly, the first electrode terminal 40 has the first polarity. The first electrode terminal 40 may be electrically insulated from the battery can 20 having the second polarity.

The first electrode terminal 40 includes an exposed terminal portion 41 and an inserted terminal portion 42. The exposed terminal portion 41 is exposed through the battery can 20. The exposed terminal portion 41 is disposed at the center of the upper surface of the battery can 20. The inserted terminal portion 42 is electrically connected to the first electrode tab 11 through the center of the upper surface of the battery can 20. The inserted terminal portion 42 may be riveted on the inner surface of the battery can 20.

The upper surface of the battery can 20 and the first electrode terminal 40 have the opposite polarities and face the same direction. Additionally, a step may be formed between the first electrode terminal 40 and the upper surface of the battery can 20. Specifically, when the entire upper surface of the battery can 20 has a flat shape or protrudes upward from the center, the exposed terminal portion 41 of the first electrode terminal 40 may protrude upward above the upper surface of the battery can 20. On the contrary, when the upper surface of the battery can 20 has an inward curved shape in the downward direction from the center, that is to say, a direction toward the electrode assembly 10, the upper surface of the battery can 20 may protrude upward above the exposed terminal portion 41 of the first electrode terminal 40.

The insulation gasket 50 is interposed between the battery can 20 and the first electrode terminal 40 to prevent the contact between the battery can 20 and the first electrode terminal 40 having the opposite polarities. The upper surface of the battery can 20 having an approximately flat shape may act as the second electrode terminal of the battery cell 100.

The insulation gasket 50 includes an exposed portion 51 and an inserted portion 52. The exposed portion 51 is interposed between the exposed terminal portion 41 of the first electrode terminal 40 and the battery can 20. The inserted portion 52 is interposed between the inserted terminal portion 42 of the first electrode terminal 40 and the battery can 20. The insulation gasket 50 may be made of, for example, a resin having insulating properties.

When the insulation gasket 50 is made of a resin, the insulation gasket 50 may be coupled to the battery can 20 and the first electrode terminal 40, for example, by heat welding. In this instance, it is possible to enhance sealability at the coupling interface between the insulation gasket 50 and the first electrode terminal 40 and sealability at the coupling interface between the insulation gasket 50 and the battery can 20.

The entire remaining area except the area occupied by the first electrode terminal 40 and the insulation gasket 50 in the upper surface of the battery can 20 corresponds to the second electrode terminal 20a having the opposite polarity to the first electrode terminal 40.

The battery cell 100 according to an embodiment of the present disclosure includes the first electrode terminal 40 having the first polarity and the second electrode terminal 20a having the second polarity electrically insulated from the first electrode terminal 40 together on one side in the lengthwise direction (parallel to the Z axis). That is, since the battery cell 100 according to an embodiment of the present disclosure has the pair of electrode terminals 40, 20a in the same direction, it is possible to place an electrical connection component such as the busbar assembly 200 on only one side of the battery cells 100 when electrically connecting the plurality of battery cells 100. This may lead to the simple structure of the battery pack 1 and improved energy density.

Hereinafter, the busbar assembly 200 for electrical connection to the plurality of battery cells 100 will be described in more detail.

Referring back to FIG. 2, the busbar assembly 200 may be disposed on one side of the battery cells 100, to be specific, the upper side (+Z axis direction) of the battery cells 100 and electrically connected to the plurality of battery cells 100. The electrical connection of the busbar assembly 200 may be a parallel and/or series connection.

The busbar assembly 200 may be electrically connected to the first electrode terminal 40 (see FIG. 3) of the plurality of battery cells 100, having the first polarity, and the second electrode terminal 20a (see FIG. 3) of the battery can 20, having the second polarity, and may be electrically connected to an external charge/discharge line through a connector terminal 290. Here, the first polarity may be positive, and the second polarity may be negative.

Hereinafter, the components of the busbar assembly 200 will be described in more detail.

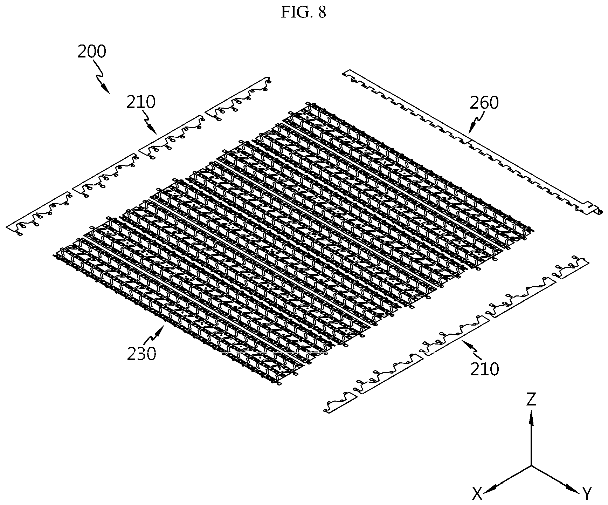

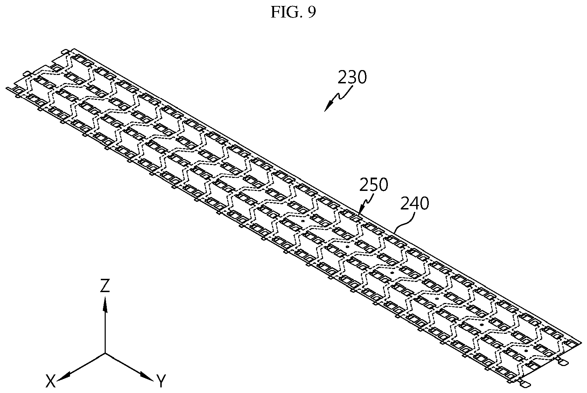

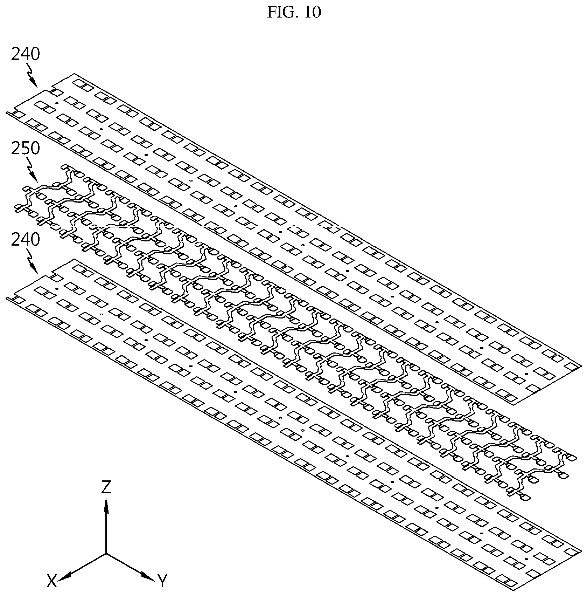

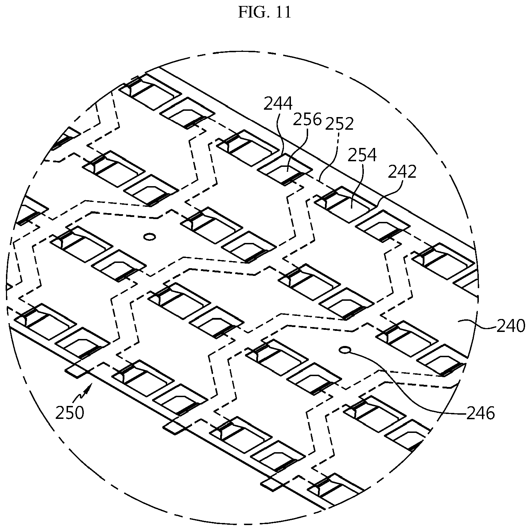

FIG. 8 is a diagram illustrating the busbar assembly of the battery pack of FIG. 2, FIG. 9 is a diagram illustrating a connection busbar unit of the busbar assembly of FIG. 8, FIG. 10 is an exploded perspective view of the connection busbar unit of FIG. 9, and FIG. 11 is an enlarged diagram illustrating the main parts of the connection busbar unit of FIG. 9.

Referring to FIGS. 8 to 11 and FIG. 2, the busbar assembly 200 may include a main busbar unit 210, the connection busbar unit 230, an interconnection board 260 and the connector terminal 290.

The main busbar unit 210 may include a plurality of main busbar units 210, and may be electrically connected to the battery cells 100 disposed at the outermost side of the battery pack 1 in the lengthwise direction (Y axis direction). The main busbar units 210 may be electrically connected to the connector terminal 290 as described below.

The connection busbar unit 230 may be disposed between the main busbar units 210 in the lengthwise direction (Y axis direction) of the battery pack 1, and may be electrically connected to the plurality of battery cells 100 and cover the plurality of battery cells 100.

The connection busbar unit 230 may include a single connection busbar unit 230 in a sufficient size to cover all the plurality of battery cells 100 or a plurality of connection busbar units 230 to cover the plurality of battery cells 100. Hereinafter, this embodiment will be described based on the plurality of connection busbar units 230.

Each of the plurality of connection busbar units 230 may include a busbar cover 240 and a sub busbar 250.

The busbar cover 240 may cover the upper side of the plurality of battery cells 100, and may have an approximately flat plate shape. The shape and size of the busbar cover 240 may change depending on the number of battery cells 100 or capacity required for the battery pack 1.

The busbar cover 240 may comprise an insulating material. For example, the busbar cover 240 may comprise a polyimide film. The busbar cover 240 is not limited thereto and may include any other insulation member made of an insulating material.

The busbar cover 240 may include a pair of busbar covers 240 having matching shapes and sizes in the up-down direction (Z axis direction) of the battery pack 1 and coupled to each other. Here, the sub busbar 250 as described below may be a single layer, and may be inserted between the pair of busbar covers 240.

The busbar cover 240 may include a positive busbar hole 242, a negative busbar hole 244 and a guide hole 246.

The positive busbar hole 242 may have an open space of a predetermined size, and may include a plurality of positive busbar holes 242. The positive busbar hole 242 may expose a positive connection portion 254 as described below. Here, the positive busbar hole 242 may have the open space that is larger than the size of the positive connection portion 254 as described below to improve the process efficiency and increase the injection efficiency of the filler member 500 as described below.

The positive busbar hole 242 may efficiently guide the electrical connection to the positive connection portion 254 to the first electrode terminal 40 (see FIG. 3) which is the positive electrode of the battery cells 100 as described below.

Furthermore, the open space of the positive busbar hole 242 may remarkably increase the injection efficiency of the filler member 500 as described below. Specifically, the filler member 500 comprising a potting resin 500 as described below may be injected more directly in the vertical direction (Z axis direction) downward from the top of the battery pack 1 through the open space of the positive busbar hole 242, thereby remarkably improving the injection efficiency between the battery cells 100.

The negative busbar hole 244 may be disposed opposite the positive busbar hole 242, and have an open space of a predetermined size in the same way as the positive busbar hole 242. The negative busbar hole 244 may include a plurality of negative busbar holes 244. Here, the negative busbar hole 244 may have the open space that is larger than the size of a negative connection portion 256 as described below to improve the process efficiency and increase the injection efficiency of the filler member 500 as described below.

The negative busbar hole 244 may efficiently guide the electrical connection of the negative connection portion 256 as described below to the battery can 20 (see FIG. 3) which is the negative electrode of the battery cells 100, to be specific, the second electrode terminal 20a.

Furthermore, the open space of the negative busbar hole 244 may remarkably increase the injection efficiency of the filler member 500 as described below. Specifically, the filler member 500 comprising the potting resin 500 as described below may be injected more directly in the vertical direction (Z axis direction) downward from the top of the battery pack 1 through the open space of the negative busbar hole 244, thereby remarkably improving the injection efficiency between the battery cells 100.

The guide hole 246 may guide the assembly position of the busbar assembly 200. Specifically, the guide hole 246 may guide the placement of the connection busbar unit 230 in position by securing the connection busbar unit 230 to the side structure unit 400.

The guide hole 246 may include a plurality of guide holes 246. Busbar guide protrusions 416 of the side structure unit 400 as described below may be inserted into the plurality of guide holes 246.

The sub busbar 250 may be configured to electrically connect the positive or first electrode terminal 40 and the negative or second electrode terminal 20a of the plurality of battery cells 100, and may be disposed on the busbar cover 240 or inserted between the pair of busbar covers 240. Hereinafter, this embodiment will be described based on the sub busbar 250 inserted into or coupled to the busbar cover 240.

The sub busbar 250 may include a busbar bridge 252, the positive connection portion 254 and the negative connection portion 256.

The busbar bridge 252 may be inserted into the busbar cover 240, and may be formed with a predetermined length along the widthwise direction (X axis direction) of the battery pack 1. The busbar bridge 252 may have a shape corresponding to the arrangement structure of the battery cells 100 in the widthwise direction (X axis direction) of the battery pack 1 to increase the electrical connection efficiency with the battery cells 100. Accordingly, in this embodiment, the busbar bridge 252 may have a zigzag shape in the widthwise direction (X axis direction) of the battery pack 1.

The busbar bridge 252 may include a plurality of busbar bridges 252. The plurality of busbar bridges 252 may be inserted into the busbar cover 240 and arranged spaced a predetermined distance apart from each other in the lengthwise direction (Y axis direction) of the battery pack 1.

The busbar bridge 252 may be made of a conductive material. For example, the busbar bridge 252 may be made of a metal such as aluminum or copper. The busbar bridge 252 is not limited thereto and may be made of any other material for the electrical connection.

The positive connection portion 254 may be integrally extended and protruded from the busbar bridge 252, and disposed in the positive busbar hole 242. The positive connection portion 254 may be electrically connected to the first electrode terminal 40 (see FIG. 3) which is the positive electrode of the battery cell 100. The electrical connection may be made through a welding process for electrical connection, such as laser welding or ultrasonic welding.

Since the connection between the positive connection portion 254 and the positive electrode 40 (the first electrode terminal) of the battery cell 100 is made in the open space of the positive busbar hole 242, the welding process for the connection may be performed in the open space directly without any additional process when making the connection.

The negative connection portion 256 may be integrally extended from the busbar bridge 252 and protruded in the opposite direction to the positive connection portion 254, and may be disposed in the negative busbar hole 244. The negative connection portion 256 may be electrically connected to the second electrode terminal 20a (see FIG. 3) which is the negative electrode of the battery cell 100. The electrical connection may be made through a welding process for the electrical connection, such as laser welding or ultrasonic welding.

Since the connection between the negative connection portion 256 and the negative electrode 20a (the second electrode terminal) of the battery cell 100 is made in the open space of the negative busbar hole 244, the welding process for the connection may be performed in the open space directly without any additional process when making the connection.

The interconnection board 260 may be connected to the external sensing line, and may be disposed at one end (-Y axis direction) of the battery pack 1. The location of the interconnection board 260 may change according to the design, and the interconnection board 260 may be disposed at any other location for connection to the external sensing line. Furthermore, the interconnection board 260 may include a plurality of interconnection boards 260 according to the number of battery cells 100 or capacity of the battery pack 1.

The interconnection board 260 may be exposed through the battery pack 1 for connection to the external sensing line. The external sensing line may connect the interconnection board 260 to a battery management system (not shown). The battery management system may determine the state of charge (SOC) of the battery cells connected in parallel based on the voltage of the battery cells.

The interconnection board 260 may include thermistor to determine the temperature condition of the battery cells 100. The thermistor may be embedded in the interconnection board 260 or mounted outside of the interconnection board 260. The connector terminal 290 may include a pair of connector terminals 290. The pair of connector terminals 290 may be used for connection to the external charge/discharge line, and may be high voltage connector terminals.

Referring back to FIG. 2, the cooling unit 300 is configured to cool the battery cells 100, and may be positioned below the busbar assembly 200 (-Z axis direction) between the plurality of battery cells 100 along the lengthwise direction (Y axis direction) of the battery pack 1.

The cooling unit 300 may include a plurality of cooling units 300.

The plurality of cooling units 300 may be arranged facing the plurality of battery cells 100 in the widthwise direction (X axis direction) of the battery pack 1. Here, the plurality of cooling units 300 may be positioned in contact with the facing battery cells 100 to increase the cooling performance.

Hereinafter, the cooling unit 300 will be described in more detail.

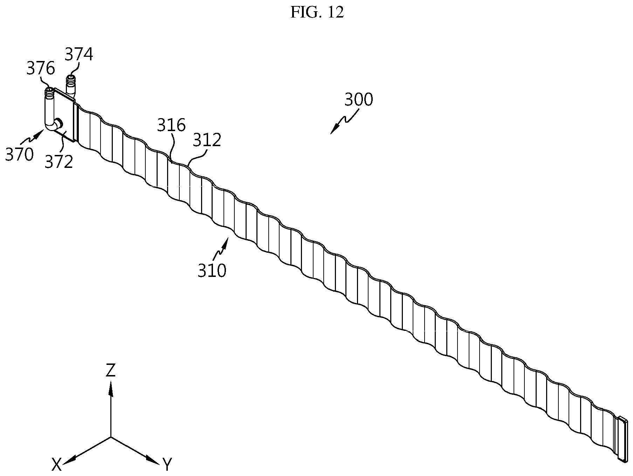

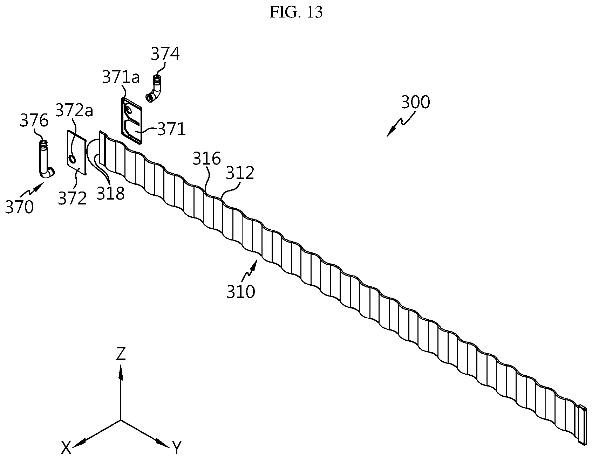

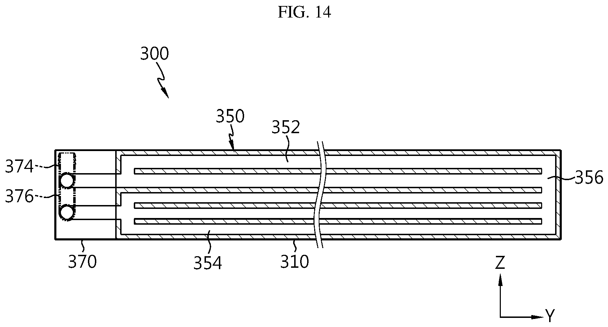

FIG. 12 is a diagram illustrating the cooling unit of the battery pack of FIG. 2, FIG. 13 is an exploded perspective view of the cooling unit of FIG. 12, and FIG. 14 is a cross-sectional view of the cooling unit of FIG. 12.

Referring to FIGS. 12 to 14 and FIG. 2, the cooling unit 300 may include a cooling tube 310, a cooling channel 350 and a cooling fluid inlet/outlet 370.

The cooling tube 310 may be formed with a predetermined size along the lengthwise direction (Y axis direction) of the battery pack 1, and may be disposed between the plurality of battery cells 100 and include the cooling channel 350 in which a cooling fluid as described below circulates. In this embodiment, the cooling fluid may be water, and in addition to the water, may include at least one fluid that may exchange heat with the surrounding environment.

The cooling tube 310 may be formed in a shape corresponding to the outer surface of the plurality of battery cells 100 facing the cooling tube 310 in the widthwise direction (X axis direction) of the battery pack 1.

The cooling tube 310 may have a plurality of convex portions 312 and a plurality of concave portions 316 in an alternating manner along the lengthwise direction (Y axis direction) of the battery pack 1, the convex portions 312 and the concave portions 316 having convex and concave shapes in the widthwise direction (X axis direction) of the battery pack 1, respectively.

The cooling tube 310 may be positioned in contact with the outer surface of the plurality of battery cells 100 to further increase the cooling performance of the battery cells 100. The cooling tube 310 may be adhered and secured to the plurality of battery cells 100 through the filler member 500 as described below or an adhesive member.

A cooling fluid guide portion 318 may be disposed at one end (-Y axis direction) of the cooling tube 310 to guide the cooling fluid into the cooling channel 350 as described below. The cooling fluid guide portion 318 may be disposed at one end (-Y axis direction) of the cooling tube 310 in the lengthwise direction (Y axis direction) and may include a pair of cooling fluid guide portions 318. Any one of the pair of cooling fluid guide portions 318 may be in communication with an upper channel 352 of the cooling channel 350 as described below, and the other may be in communication with a lower channel 354 of the cooling channel 350 as described below. Specifically, any one of the pair of cooling fluid guide portions 318 may be disposed at the upper side (+Z axis direction) in the heightwise direction (Z axis direction) of the cooling tube 310 to communicate with the upper channel 352 as described below, and the other may be disposed at the lower side (-Z axis direction) in the heightwise direction (Z axis direction) of the cooling tube 310 to communicate with the lower channel 354 as described below.

The cooling channel 350 may allow the cooling fluid for cooling the battery cells 100 to circulate. The cooling channel 350 may be disposed in the cooling tube 310 and connected in communication with the cooling fluid inlet/outlet 370 as described below.

The cooling channel 350 may include the upper channel 352, the lower channel 354 and a connection channel 356.

The upper channel 352 may be disposed on the cooling tube 310 near the busbar assembly 200, and may be formed with a predetermined length along the lengthwise direction (X axis direction) of the cooling tube 310. The upper channel 352 may be connected in communication with a cooling fluid feed port 374 of the cooling fluid inlet/outlet 370.

The upper channel 352 may include at least one upper channel 352. Hereinafter, this embodiment is described based on a plurality of upper channels 352 to ensure the cooling performance.

The lower channel 354 may be disposed below the cooling tube 310 (-Z axis direction) spaced apart from the at least one upper channel 352, and may be formed with a predetermined length along the lengthwise direction (X axis direction) of the cooling tube 310. The lower channel 354 may be connected in communication with a cooling fluid exit port 376 of the cooling fluid inlet/outlet 370.

The lower channel 354 may include at least one lower channel 354. Hereinafter, this embodiment is described based on a plurality of lower channels 354 to ensure the cooling performance.

The connection channel 356 may connect the at least one upper channel, in this embodiment, the plurality of upper channels 352 to the at least one lower channel, in this embodiment, the plurality of lower channels 354.

The connection channel 356 may be disposed at the other end (+Y axis direction) of the cooling tube 310 opposite the cooling fluid inlet/outlet 370 to maximize the cooling channel 350.

In this embodiment, during the circulation of the cooling fluid in the cooling channel 350, the cooling fluid fed from the cooling fluid feed port 374 may be fed to the upper channel 352 close to the busbar assembly 200 and flow to the cooling fluid exit port 376 through the connection channel 356 and the lower channel 354.

Accordingly, in this embodiment, since the cold cooling fluid is fed to an area close to the busbar assembly 200 having a higher temperature distribution in the battery pack 1, it is possible to remarkably improve the cooling performance of the battery cells.

The cooling fluid inlet/outlet 370 may be connected to the cooling tube 310 such that it is in communication with the cooling channel 350 of the cooling tube 310. The cooling fluid inlet/outlet 370 may be exposed through the side structure unit 400 as described below and connected in communication with an external cooling line.

The cooling fluid inlet/outlet 370 may be disposed on one side (-Y axis direction) in the lengthwise direction (Y axis direction) of the battery pack 1. The cooling tube 310 connected to the cooling fluid inlet/outlet 370 may be formed with a predetermined length from the cooling fluid inlet/outlet 370 toward the other side (+Y axis direction) of the battery pack 1 in the lengthwise direction (Y axis direction) of the battery pack 1.

The cooling fluid inlet/outlet 370 may include inlet/outlet bodies 371, 372, the cooling fluid feed port 374 and the cooling fluid exit port 376.

The inlet/outlet bodies 371, 372 may be connected to one end (-Y axis direction) of the cooling tube 310. The inlet/outlet bodies 371, 372 may include a feed port body 371 and an exit port body 372.

The feed port body 371 may cover one end (-Y axis direction) of the cooling tube 310, and may be coupled to the exit port body 372 as described below. The feed port body 371 may have a feed port through-hole 371a through which the cooling fluid feed port 374 as described below passes. The cooling fluid feed port 374 as described below may be in communication with the upper channel 352 as described below through the cooling fluid guide portion 318 via the feed port through-hole 371a. Specifically, the cooling fluid feed port 374 as described below may be in communication with the upper channel 352 as described below through the cooling fluid guide portion 318 disposed at the upper part (+Z axis direction) of the cooling fluid guide portion 318 of the cooling tube 310.

The exit port body 372 may be coupled to the feed port body 371 on the opposite side to the feed port body 371 with respect to one end (-Y axis direction) of the cooling tube 310 to cover one end (-Y axis direction) of the cooling tube 310. Here, the exit port body 372 and the feed port body 371 may be assembled to each other through press hemming.

The exit port body 372 may have an exit port through-hole 372a through which the cooling fluid exit port 376 as described below passes. The cooling fluid exit port 376 as described below may be in communication with the lower channel 354 as described below through the cooling fluid guide portion 318 via the exit port through-hole 372a. Specifically, the cooling fluid exit port 376 as described below may be in communication with the lower channel 354 as described below through the cooling fluid guide portion 318 disposed at the lower part (-Z axis direction) of the cooling fluid guide portion 318 of the cooling tube 310.

The cooling fluid feed port 374 may be disposed in the feed port body 371 of the inlet/outlet bodies 371, 372 and connected in communication with the upper channel 352. Here, the cooling fluid feed port 374 may be coupled to the feed port body 371 by cauking. The cooling fluid feed port 374 may be connected in communication with the external cooling line.

The cooling fluid exit port 376 may be disposed in the exit port body 372 of the inlet/outlet bodies 371, 372 and connected in communication with the lower channel 354. Here, the cooling fluid exit port 376 may be coupled to the exit port body 372 by cauking. The cooling fluid exit port 376 may be spaced a predetermined distance apart from the cooling fluid feed port 374 and connected in communication with the external cooling line.

Referring back to FIG. 2, the side structure unit 400 may be made of plastic resin, and may support the battery cells 100, ensure the strength of the battery cells 100 and form the side appearance of the battery pack 1.

Hereinafter, the side structure unit 400 will be described in more detail through the following related drawings.

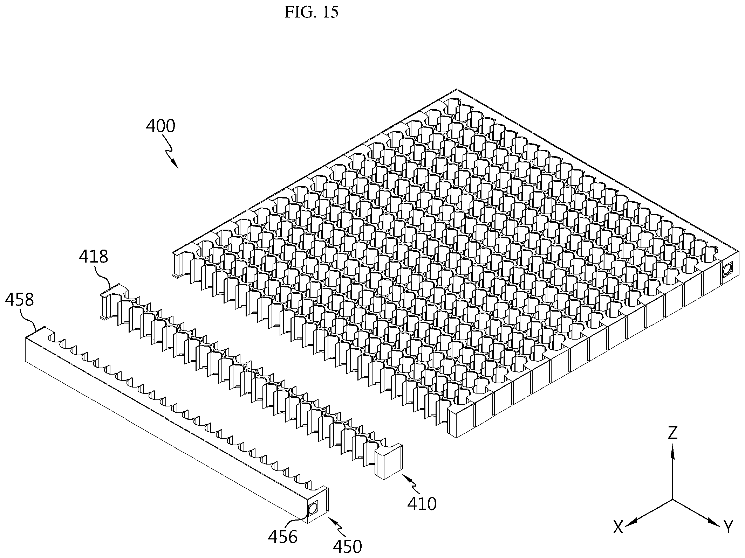

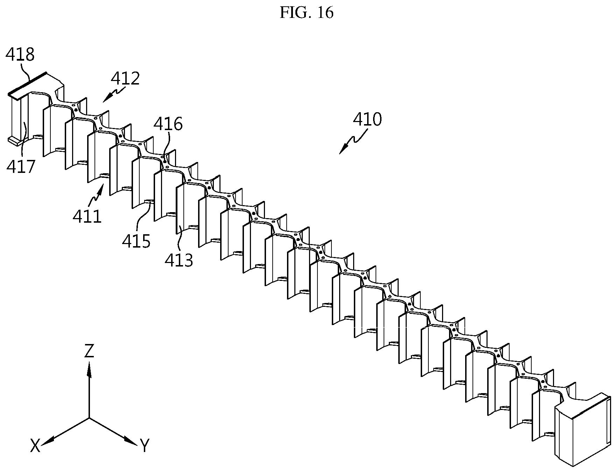

FIG. 15 is a diagram illustrating the side structure unit of the battery pack of FIG. 2, and FIG. 16 is a diagram illustrating a main plate of the side structure unit of FIG. 15.

Referring to FIGS. 15 and 16, the side structure unit 400 may act as a pack case to support the battery cells 100, ensure the strength of the battery cells 100, and form the side appearance of the battery pack 1 (see FIG. 2) to form the appearance of the battery pack 1 (see FIG. 2).

The side structure unit 400 may be formed with a predetermined length along the lengthwise direction (Y axis direction) of the battery pack 1, and may accommodate and support the battery cells 100.

The side structure unit 400 may include the main plate 410 and an end plate 450.

The main plate 410 may be formed with the predetermined length along the lengthwise direction (Y axis direction) of the battery pack 1, and may accommodate the battery cells 100 such that the battery cells 100 are arranged in two rows in the widthwise direction (X axis direction) of the battery pack 1. The main plate 410 may include a plurality of main plates 410, and the plurality of main plates 410 may be arranged spaced a predetermined distance apart from each other along the widthwise direction (X axis direction) of the battery pack 1.

The plurality of main plates 410 may ensure the strength of the battery cells 100 and the cooling unit 300 and reduce the injection amount of the filler member 500 as described below by occupying a predetermined space in the battery pack 1 (see FIG. 2). Since the filler member 500 comprising a silicone resin as described below is relatively high in price, it is possible to reduce the injection amount of the silicone resin through the plurality of main plates 410, thereby achieving price competitiveness in the fabrication of the battery pack 1.

Each of the plurality of main plates 410 may include a first cell accommodation portion 411, a second cell accommodation portion 412, an inter-wing 413, a bottom rib 415, a busbar guide protrusion 416, a cooling unit insertion groove 417 and a guide step 418.

The first cell accommodation portion 411 may be disposed on the front side of the main plate 410 (+X axis direction) along the lengthwise direction (Y axis direction) of the main plate 410. The first cell accommodation portion 411 may accommodate the plurality of battery cells 100 arranged in the lengthwise direction (Y axis direction) of the battery pack 1. To this end, the first cell accommodation portion 411 may include a plurality of first cell accommodation portions 411 on the front side (+X axis direction) of the main plate 410.

Each of the plurality of first cell accommodation portions 411 may have a concave shape corresponding to the outer surface of the battery cells 100, and cover at least part of the outer surface of the battery cells 100.

The second cell accommodation portion 412 may be disposed on the rear side of the main plate 410 (-X axis direction) along the lengthwise direction (Y axis direction) of the main plate 410. The second cell accommodation portion 412 may accommodate the plurality of battery cells 100 arranged in the lengthwise direction (Y axis direction) of the battery pack 1. To this end, the second cell accommodation portion 412 may include a plurality of second cell accommodation portions 412 on the rear side (-X axis direction) of the main plate 410.

Each of the plurality of second cell accommodation portions 412 may have a concave shape corresponding to the outer surface of the battery cells 100, and cover at least part of the outer surface of the battery cells 100.

The plurality of second cell accommodation portions 412 may be arranged with the plurality of first cell accommodation portions 411 in a staggered pattern in the front-rear direction (X axis direction) of the main plate 410 to accommodate as many battery cells 100 or cylindrical secondary batteries as possible.

The inter-wing 413 may include a plurality of inter-wings 413, and may protrude along the widthwise direction (X axis direction) of the main plate 410 to define the plurality of first and second cell accommodation portions 411, 412. Specifically, the plurality of inter-wings 413 may be formed on both the front side (+X axis direction) and the rear side (-X axis direction) in the widthwise direction (X axis direction) of the main plate 410. More specifically, among the plurality of inter-wings 413, the inter-wings 413 protruded toward the front side (+axis direction) of the main plate 410 may define the plurality of first cell accommodation portions 411, and among the plurality of inter-wings 413, the inter-wings 413 protruded toward the rear side (-axis direction) of the main plate 410 may define the plurality of second cell accommodation portions 412.

The bottom rib 415 may be disposed on the bottom of the main plate 410 to support the bottom of the battery cells 100 when the battery cells 100 are received in the main plate 410.

The bottom rib 415 may protrude in a further downward direction (-Z axis direction) than the bottom of the battery cells 100 when the battery cells 100 are received in the main plate 410.

The busbar guide protrusion 416 may be configured to secure the connection busbar unit 230 when assembling the busbar assembly 200, and disposed on the upper surface of the main plate 410. The busbar guide protrusion 416 may include at least one busbar guide protrusion 416. Hereinafter, this embodiment will be described based on a plurality of busbar fixing holes 416.

The plurality of busbar guide protrusions 416 may be inserted into the guide hole 246 of the busbar cover 240 when assembling the busbar assembly 200, and may guide the placement of the connection busbar unit 230 in position. Since the connection busbar unit 230 is inserted into or coupled or secured to the plurality of busbar guide protrusions 416, it is possible to perform the welding process for electrical connection of the busbar assembly 200 more stably, thereby improving the welding quality in the welding process.

The cooling unit insertion groove 417 may be configured to receive the end of the cooling unit 300, and may be disposed at an end of the main plate 410 in the lengthwise direction (Y axis direction). When the main plates 410 are coupled, the end of the cooling unit 300 may be securely disposed in the cooling unit insertion groove 417 more stably.

The guide step 418 may protrude to a predetermined height at two upper ends in the lengthwise direction (Y axis direction) of the main plate 410. The guide step 418 may form the edge of the side structure unit 400 together with an end guide step 458 of the end plate 450 as described below when the assembly of the side structure unit 400 is completed by the coupling of the main plates 410 and the end plate 450 as described below.

The end plate 450 may include a pair of end plates 450, and the pair of end plates 450 may be disposed on two outermost sides of the side structure unit 400 in the widthwise direction (X axis direction). The pair of end plates 450 may accommodate and support the battery cells 100 together with the main plate 410 disposed on the opposite side.

The pair of end plates 450 may have a terminal hole 456 and the end guide step 458.

The terminal hole 456 may be configured to accommodate the connector terminal 290, and may be disposed on one side of the end plate 450.

The end guide step 458 may be formed along the upper edge of the end plate 450, and may protrude to the equal height to the guide step 418. The end guide step 458 may form the edge of the side structure unit 400 together with the guide step 418 of the main plates 410 when the assembly of the side structure unit 400 is completed.

Hereinafter, the coupling structure of the battery cells 100 and the cooling units 300 through the side structure unit 400 will be described in more detail.

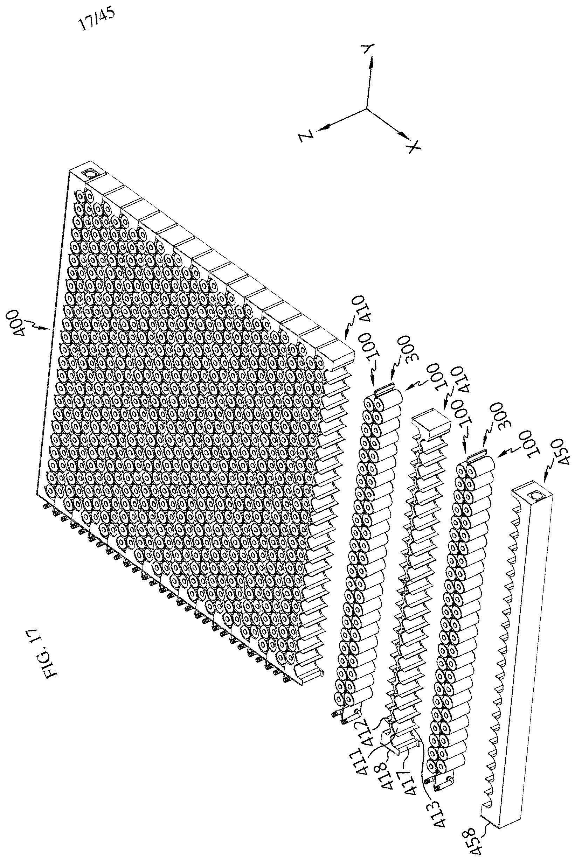

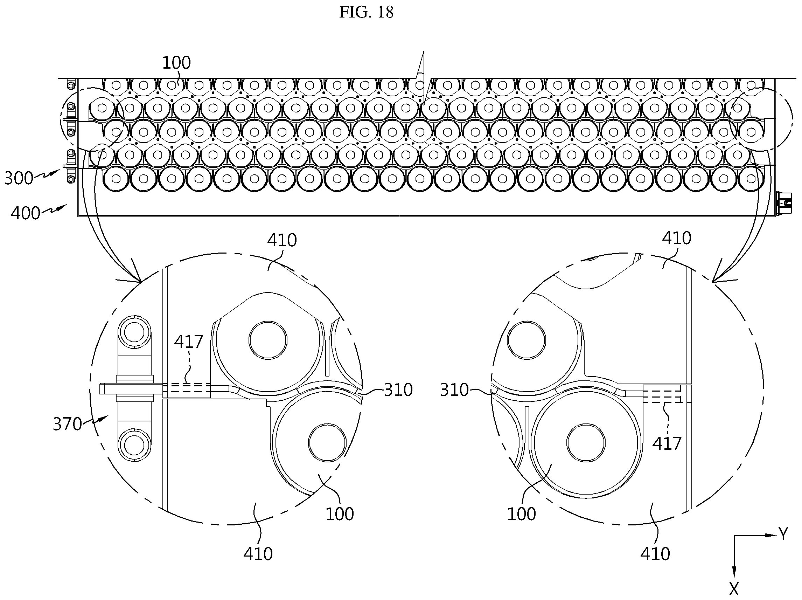

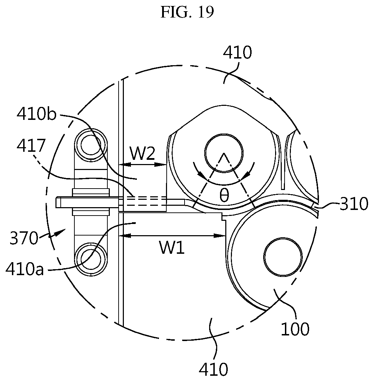

FIGS. 17 to 20 are diagrams illustrating the coupling structure of the battery cells and the cooling units through the side structure unit of FIG. 15.

Referring to FIGS. 17 to 20, first, the cooling tube 310 of the cooling unit 300 may be inserted in between the battery cells 100 arranged in two rows in the front-rear direction along the widthwise direction (X axis direction) of the battery pack 1 (see FIG. 2). The side structure unit 400 may accommodate the battery cells 100 facing the side structure unit 400 in the front-rear direction (X axis direction) of the battery cells 100 into which the cooling tube 310 is inserted.

Specifically, the end plate 450 on the outermost side, the battery cells 100, the cooling tube 310, the battery cells 100 and the main plate 410 may be arranged in the widthwise direction (X axis direction) of the battery pack 1 (see FIG. 2), and in turn, the battery cells 100, the cooling tube 310, the battery cells 100 and the main plate 410 may be arranged and coupled in that order. Subsequently, the end plate 450 on the opposite outermost side in the widthwise direction (X axis direction) of the battery pack 1 (see FIG. 2) may be finally disposed and coupled to complete the coupling of the side structure unit 400 so that the battery cells 100 and the cooling units 300 are received in the side structure unit 400.

Here, when the main plates 410 are coupled and the main plate 410 is coupled to the end plate 450, two ends of the cooling unit 300 may be inserted into the cooling unit insertion groove 417, thereby preventing interference with the cooling unit 300 and securing the cooling unit 300 more stably.

When coupling the main plates 410, a thick part 410a and a thin part 410b facing each other may have the following relationship. As described below, a contact angle θ between the battery cells 100 and the cooling tube 310 may be approximately 60°. Here, a length W1 of the thick part 410a of the main plate 410 may be at least equal to or smaller than the diameter of the battery cells 100, and a length W2 of the thin part 410b of the main plates 410 may be at least equal to or smaller than the radius of the battery cells 100.

In the end, the length W1 of the thick part 410a of the main plate 410 cannot be larger than the diameter of the battery cells 100, and the length W2 of the thin part 410b of the main plates 410 cannot be larger than the radius of the battery cells 100.

Specifically, in this embodiment, when the diameter of the battery cells 100 is 46 mm, the length W1 of the thick part 410a of the main plate 410 may be at least equal to or smaller than 46 mm. For example, the length W1 of the thick part 410a of the main plate 410 may be in a range between 44 mm and 46 mm. Additionally, the length W2 of the thin part 4110b of the main plate 410 may be at least equal to or smaller than 23 mm. For example, the length W2 of the thin part 410b of the main plate 410 may be in a range between 21 mm and 23 mm.

Meanwhile, the cooling unit insertion groove 417 may be disposed in the thin part 410b among the thick part 410a and the thin part 410b of the main plate 410. Here, the cooling unit insertion groove 417 may accommodate the end of the cooling tube 310, and may be at least equal to the thickness of the cooling tube 310 or larger than the thickness of the cooling tube 310, taking the assembly tolerance into account.

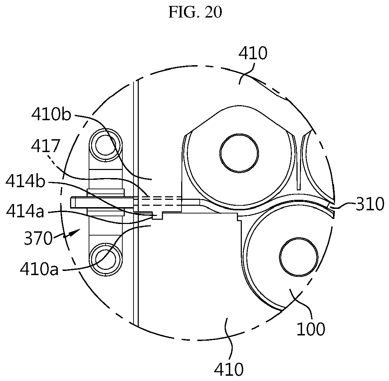

Meanwhile, referring to FIG. 20, the thick part 410a and the thin part 410b of the main plate 410 may be coupled to each other to improve the tight coupling of the main plates 410. Specifically, the thick part 410a and the thin part 410b of the main plate 410 may be fit into each other at an area where they face each other. To this end, the thick part 410a of the main plate 410 may have a fitting groove 414a of a predetermined depth, and the thin part 410b of the main plate 410 may have a fitting protrusion 414b which may be inserted into the fitting groove 414a. This is provided by way of illustration, and the fitting groove 414a may be present in the thin part 410b of the main plate 410, and the fitting protrusion 414b may be present in the thick part 410a of the main plate 410.

Additionally, the cooling fluid inlet/outlet 370 at one end of the cooling units 300 may protrude out of the side structure unit 400 for connection to the external cooling line.

The side structure unit 400 according to this embodiment may accommodate the battery cells 100 and the cooling units 300 and form the side outer structure of the battery pack 1 (see FIG. 2) through the coupling between the main plates 410 and the end plates 450. That is, the side structure unit 400 may act as the pack case that forms the appearance of the battery pack 1.

Accordingly, the battery pack 1 (see FIG. 1) according to this embodiment may eliminate any other additional pack case or pack housing structure through the side structure unit 400, thereby reducing the manufacturing cost and the total size of the battery pack 1, and increasing the energy density.

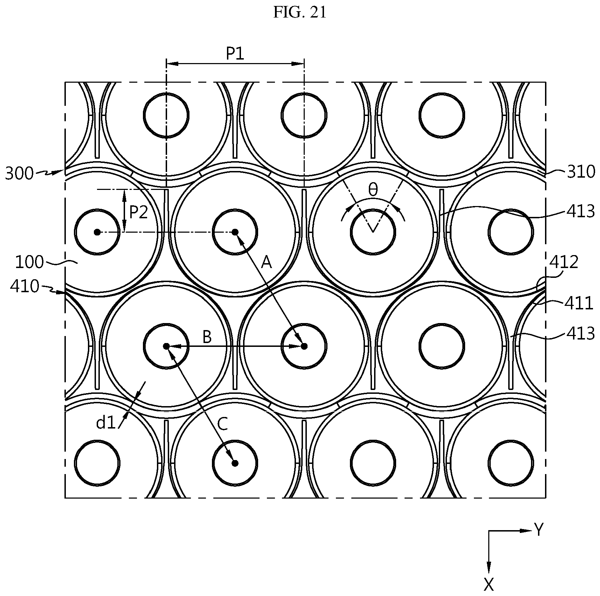

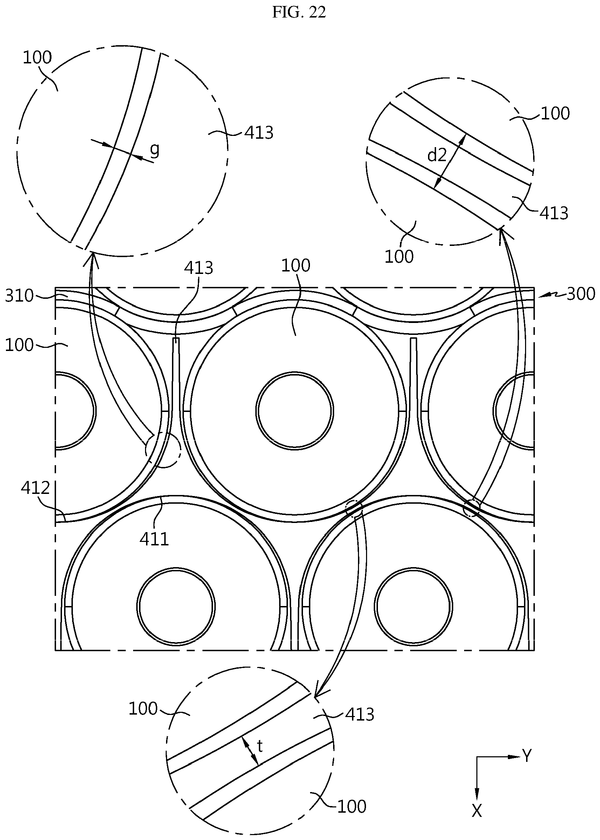

FIGS. 21 and 22 are diagrams illustrating a placement relationship between the battery cells and the cooling units through the side structure unit of FIG. 15.

Referring to FIGS. 21 and 22, the battery cells 100, the cooling unit 300 and the side structure unit 400 may be arranged at a preset distance ratio for close contact with each other.

Specifically, a distance A between the centers of the battery cells 100 between the first cell accommodation portion 411 and the second cell accommodation portion 412 of the main plate 410 may be set for close contact with the main plate 410, and may change depending on the thickness of the main plate 410.

Additionally, a distance B between the centers of the adjacent battery cells 100 in contact with one surface of the cooling tube 310 may be set to make a predetermined contact angle θ between the battery cells 100 and the cooling tube 310, for example, 60°, and may change based on a distance C as described below.

Furthermore, the distance C between the centers of the battery cells 100 disposed opposite with the cooling tube 310 interposed therebetween may reflect the thickness of the cooling tube 310, and may be determined based on the distance B between the centers of the adjacent battery cells 100 in contact with one surface of the cooling tube 310.

The distances A to C may be set to an optimal distance for closer contact among the battery cells 100, the cooling tube 310 and the side structure unit 400. Specifically, the optimal distance may be determined, taking into account the diameter of the battery cells 100, the thickness of the cooling tube 310 and the contact angle θ between the battery cells 100 and the cooling tube 310. For example, in this embodiment, the diameter of the battery cells 100 may be 46 mm, and the thickness of the cooling tube 310 may be 2.5 mm.

Meanwhile, the optimal distance may refer to a distance when the contact angle θ between the battery cell 100 and the cooling tube 310 is equal to or almost equal to 60°. The contact angle θ is set to 60° by the following reason: in case where the contact angle θ is higher than 60°, the cooling performance may improve, but the interval between the battery cells 100 increases, and the total size of the battery pack 1 increases. Furthermore, with the increasing contact angle, the tortuosity of the cooling tube 310 increases, and as a consequence, the hydraulic pressure increases and the cooling flow may be lower. Additionally, in case where the contact angle θ is lower than 60°, the cooling area decreases, resulting in low cooling efficiency.

Therefore, the contact angle θ is preferably in a range between approximately +/-1.5° with respect to 60°, taking the foregoing into account. The dimension of the distance B and the distance C may reflect the contact angle θ when setting. Specifically, the dimension of the distance B and the distance C may be set such that the contact angle θ is in a range between 58.5° and to 61.5°.

As described above, in this embodiment, the optimal distance of the distances A to C may be determined, taking into account the diameter of the battery cells 100, the thickness of the cooling tube 310 and the contact angle θ between the battery cells 100 and the cooling tube 310.

Specifically, in this embodiment, the optimal distance of the distances A to C taking all into account is as follows. As the optimal distance for the optimal contact with the main plate 410, the distance A between the centers of the battery cells 100 between the first cell accommodation portion 411 and the second cell accommodation portion 412 of the main plate 410 may be 47.5 mm. Additionally, in this embodiment, as the optimal distance for setting the optimal contact angle θ, the distance B between the centers of the adjacent battery cells 100 in contact with one surface of the cooling tube 310 may be 49 mm. Furthermore, in this embodiment, as the optimal distance reflecting the thickness of the cooling tube 310, the distance C between the centers of the battery cells 100 disposed opposite with the cooling tube 310 interposed therebetween may be 49.2 mm.

Meanwhile, a pitch P1 between the points of contact of the cooling tube 310 may be associated with the interval between the battery cells 100, and in this embodiment, the pitch P1 may be 49 mm.

A distance d1 between the battery cells 100 disposed opposite in an oblique direction with the cooling tube 310 interposed therebetween may be determined based on the assembly between the battery cells 100 and the cooling tube 310, the thickness of the cooling tube 310 and the thickness of a coating agent or a glue used to adhere the cooling tube 310 to the battery cells 100. For example, the distance d1 may be determined, taking into account the thickness of the cooling tube 310 and the thickness of the coating agent and the glue coated on two sides of the cooling tube 310. Specifically, when the thickness of the cooling tube 310 is 2.5 mm, the thickness of the coating agent (for example, epoxy coating) is a maximum of 0.25 mm and the thickness of the glue is 0.1 mm, the distance d1 may be 3.2 mm, taking into account the thickness (2.5 mm) of the cooling tube 310, and the thickness (2*0.25 mm) of the coating agent and the thickness (2*0.1 mm) of the glue, coated on the two sides of the cooling tube 310.

Meanwhile, the end of the inter-wing 413 between the first cell accommodation portion 411 and the second cell accommodation portion 412 of the main plates 410 may be shorter than one surface of the battery cells 100 that contacts the cooling tube 310 to prevent interferences with the cooling tube 310.

For example, the distance P2 between the end of the inter-wing 413 of the main plate 410 and the center of the battery cell 100 may be long enough to avoid interferences with the cooling tube 310, taking into account the diameter of the battery cells 100 or the thickness of the cooling tube 310. For example, the distance P2 between the end of the inter-wing 413 and the center of the battery cell 100 may be 15 mm.

Meanwhile, the thickness of the first cell accommodation portion 411 and the second cell accommodation portion 412 of the main plate 410 may be set, taking into account the assembly with the battery cells 100.

Specifically, the thickness of the first cell accommodation portion 411 and the second cell accommodation portion 412 of the main plate 410 may be set, taking into account the distance d2 between the battery cells 100, and the minimum thickness t of the first cell accommodation portion 411 and the second cell accommodation portion 412 may be approximately half of the distance d2 between the battery cells 100. For example, in this embodiment, the distance d2 between the battery cells 100 may be 1.5 mm, and the minimum thickness t of the first cell accommodation portion 411 and the second cell accommodation portion 412 may be approximately 0.75 mm, and specifically, 0.7 mm.

Accordingly, when the battery cells 100 are received in the first cell accommodation portion 411 and the second cell accommodation portion 412 of the main plate 410, a predetermined gap space g may be formed in the first cell accommodation portion 411 and the second cell accommodation portion 412.

The gap space g may be formed in the remaining area except an innermost area of the concave shape of the first cell accommodation portion 411 and the second cell accommodation portion 412 when the battery cells 100 are received in each cell accommodation portion 411, 412. Here, the innermost area of the concave shape of the first cell accommodation portion 411 and the second cell accommodation portion 412 may refer to an area disposed opposite the protruding portion of the inter-wing 413 on the inner surface of the concave shape of the first cell accommodation portion 411 and the second cell accommodation portion 412.

Accordingly, when the battery cells 100 are received in the first cell accommodation portion 411 and the second cell accommodation portion 412 of the main plate 410, the battery cells 100 may contact the inner surface of the first cell accommodation portion 411 and the second cell accommodation portion 412 only at the innermost area of the concave shape, and on the remaining inner surface of the first cell accommodation portion 411 and the second cell accommodation portion 412, the battery cells 100 may be spaced apart by the gap space g. Meanwhile, an adhesive that is attached to the battery cells 100 may be applied to the innermost area of the concave shape that contacts the battery cells 100.

Additionally, when the battery cells 100 are received in the first cell accommodation portion 411 and the second cell accommodation portion 412 of the main plate 410, the inter-wing 413 may be also spaced apart from the battery cells 100 by the gap space g.

In this embodiment, when assembling the battery cells 100 and the main plate 410, specifically, when receiving the battery cells 100 in the first cell accommodation portion 411 and the second cell accommodation portion 412, the gap space g may prevent interferences or collisions of the battery cells 100 with the first cell accommodation portion 411, the second cell accommodation portion 412 and the inter-wing 413, thereby remarkably improving the assembly.

Additionally, in this embodiment, the gap space g may absorb most of the assembly tolerance of the members, thereby significantly reducing the misassembly or assembly errors due to the assembly tolerance.

Furthermore, the gap space g may be filled with the filler member 500 as described below. As described above, in this embodiment, since the filler member 500 is filled in the gap space g, it is possible to increase the fill amount of the filler member 500 between the battery cells 100.

Accordingly, in this embodiment, it is possible to support the battery cells 100 in the first cell accommodation portion 411 and the second cell accommodation portion 412 of the main plate 410 more stably through the filler member 500 filled in the gap space g.

Furthermore, when an event such as thermal runaway occurs in the battery cells 100, the filler member 500 filled in the gap space g may prevent the flow of current or thermal runaway to the adjacent battery cells 100 more effectively.

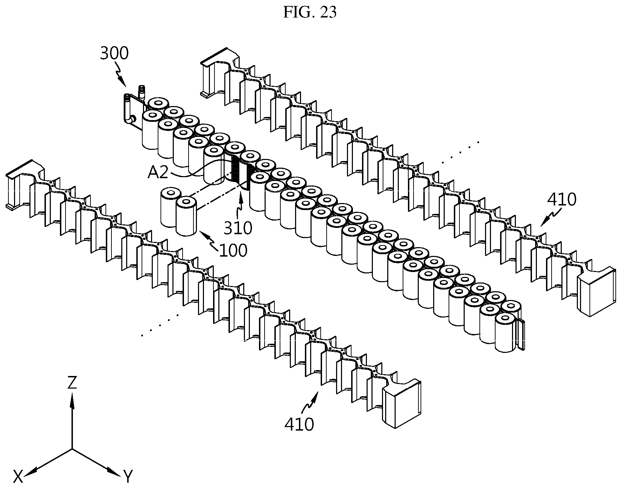

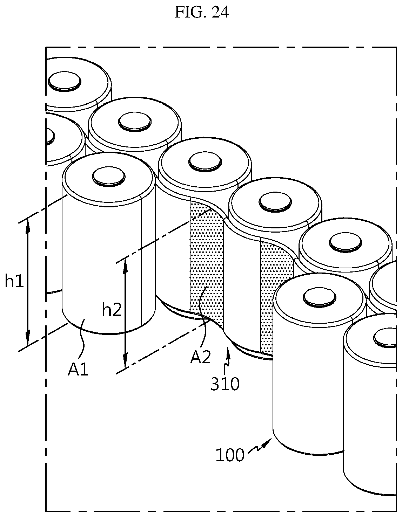

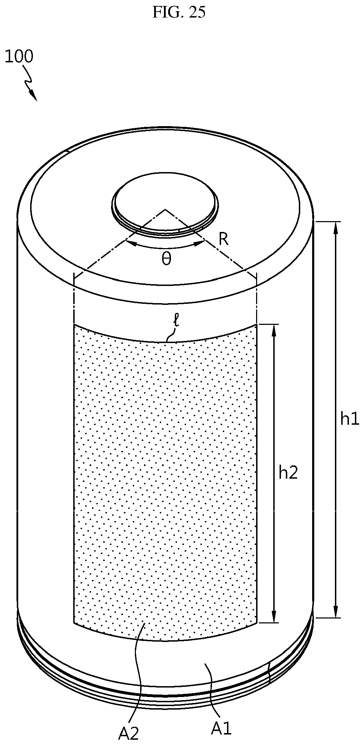

FIGS. 23 to 25 are diagrams illustrating the contact structure of the battery cells of FIG. 22 with the cooling units.

Referring to FIGS. 23 to 25, the outer surface of the battery cells 100 may contact the cooling tube 310 of the cooling unit 300 in the heightwise direction (Z axis direction). Here, a contact area A2 between the battery cells 100 and the cooling tube 310 may be determined according to the contact angle $\theta$ between the battery cell 100 and the cooling tube 310 and the height h2 of the cooling tube 310, taking into account the assembly performance and the optimal cooling performance.

In this embodiment, the contact area A2 between the battery cell 100 and the cooling tube 310 may be approximately in a range between 14% and 15% of the total area A1 of the outer surface of the battery cell 100.

For example, in this embodiment, the radius R of the battery cell 100 may be 23 mm, the height h1 of the battery cell 100 may be 80 mm, the height h2 of the cooling tube 310 may be 70 mm, and the contact angle $\theta$ between the battery cell 100 and the cooling tube 310 may be 60°. In this instance, the total area A1 of the outer surface of the battery cell 100 may be determined by multiplying the circumferential length $2\pi R$, i.e., the base length $2\pi R$ by the height h1 of the outer side of the battery cell 100. Accordingly, the total area A1 of the outer surface of the battery cells 100 may be $0.368\pi m^2$, and may equal approximately $1.16 m^2$ when 3.14 is used as a substitute for $\pi$. Additionally, the contact area A2 between the battery cell 100 and the cooling tube 310 may be determined by multiplying an arc length 1 dependent upon the contact angle $\theta$ by the height h2 of the cooling tube 310. Here, the arc length 1 may be derived by the

following Equation.

[Equation 1]

$$l = 2\pi R \times \frac{\theta}{360}$$

Accordingly, the arc length 1 may be approximately 0.077 πm, and may equal approximately 0.242 m when 3.14 is used as a substitute for π. Accordingly, the contact area A2 between the battery cell 100 and the cooling tube 310 may be approximately 0.169 m² by multiplying the arc length 1 by the height h2 of the cooling tube 310 of 70 mm.

As described above, in this embodiment, the contact area A2 between the battery cell 100 and the cooling tube 310 may be in a range of approximately 14.5% of the total area A1 of the outer surface of the battery cell 100 to ensure the optimal cooling performance and improve the assembly of the cooling tube 310.

Furthermore, in this embodiment, the height h1 of the battery cell 100 may be larger than the height h2 of the cooling tube 310 to avoid the contact between the cooling tube 310 and the connection busbar unit 230 to prevent the risks of short circuits between the cooling tube 310 and the connection busbar unit 230.

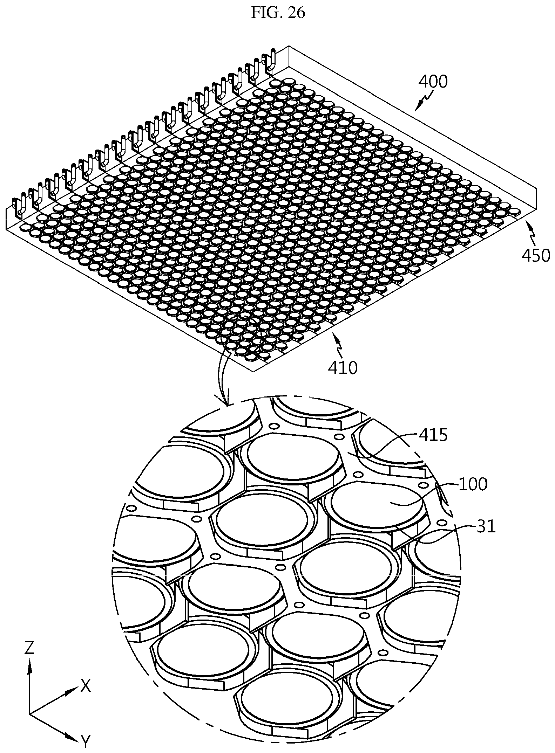

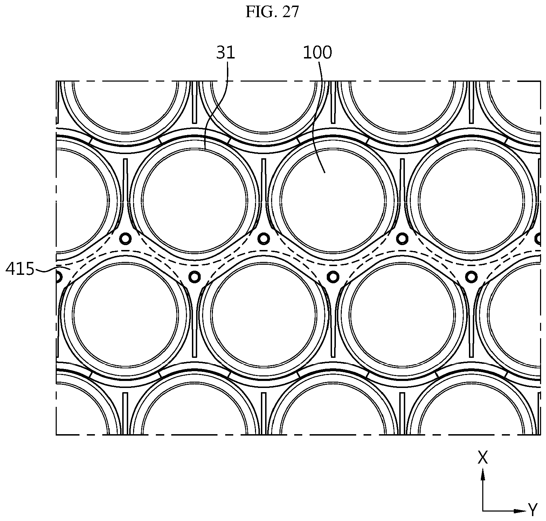

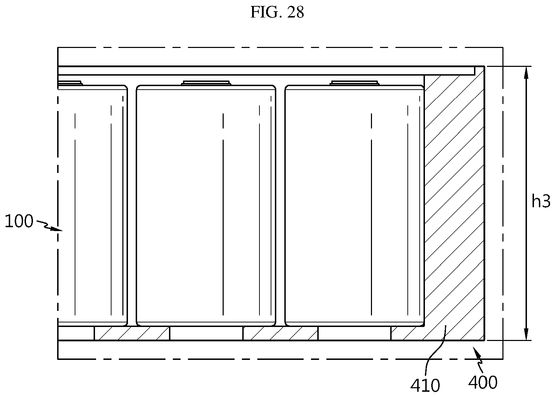

FIG. 26 is a diagram illustrating the lower surface of the side structure unit of FIG. 15 when coupling the side structure unit to the battery cells, FIG. 27 is an enlarged bottom view of the main parts of the side structure unit of FIG. 26, and FIG. 28 is a side view of the main parts of the side structure unit of FIG. 26.

Referring to FIGS. 26 to 28, the bottom rib 415 of the side structure unit 400 may protrude in a further downward direction (-Z axis direction) than the bottom of the battery cells 100, and does not interfere with the venting portion 31 of the battery cells 100. Accordingly, it is possible to achieve faster gas venting through the venting portion 31 without interferences of the bottom rib 415 when the battery cells 100 are overheated.

Furthermore, the bottom rib 415 may be configured to cover one side of the bottom of the battery cells 100 to secure the battery cells 100 in the side structure unit 400 more firmly when the battery cells 100 are received in the side structure unit 400.

In the end, a height h3 of the side structure unit 400 may be larger than the height of the battery cells 100 to cover the upper and lower sides of the battery cells 100 in the up-down direction (Z axis direction). For example, in this embodiment, since the height of the battery cells 100 is 80 mm, the height h3 of the side structure unit 400 may be larger than the height h3 of the battery cells 100 on the upper and lower sides of the battery cells 100.

Furthermore, the height h3 of the side structure unit 400 may be large enough to cover the thickness of the busbar assembly 200 and the filler member 500 seated on the battery cells 100. Specifically, the height h3 of the side structure unit 400 may be approximately in a range between 85 mm and 95 mm, taking all into account. More specifically, the height h3 of the side structure unit 400 may be 90.3 mm, and roughly 90 mm.

Referring back to FIG. 2, the filler member 500 may be filled in a space between the cooling unit 300 and the plurality of battery cells 100 in the heightwise direction (Z axis direction) of the battery pack 1. In FIG. 2, the filler member 500 is indicated by a hexahedron prism shaped dashed line for convenience of understanding, and the filler member 500 may be fully filled in the space between the cooling unit 300 and the plurality of battery cells 100.

The filler member 500 may cover the upper and lower sides of the battery pack 1 (see FIG. 2) to form the pack case structure of the battery pack 1 together with the side structure unit 400.

Additionally, the filler member 500 may not only secure the plurality of battery cells 100 more stably but also increase the thermal dissipation efficiency of the plurality of battery cells 100, thereby improving the cooling performance of the battery cells 100.

The filler member 500 may comprise the potting resin. The potting resin may be formed by injecting a thin resin material into the plurality of battery cells 100 and curing it. Here, the injection of the resin material may be performed at room temperature of about 15°C to 25°C to prevent thermal damage of the plurality of battery cells 100.

Specifically, the filler member 500 may comprise the silicone resin. The filler member 500 is not limited thereto, and may comprise any other resin material capable of securing the battery cells 100 and improving the thermal dissipation efficiency.

More specifically, the filler member 500 may cover the non-contact area between the battery cells 100 and the cooling tube 310, and thereby guide the heat balance of the battery cells 100, and thus it is possible to prevent the cooling imbalance of the battery cells 100 and prevent the local degradation of the battery cells 100. Additionally, it is possible to remarkably improve the safety of the battery cells 100 through the local degradation prevention of the battery cells 100.

Additionally, the filler member 500 may act as an insulator to obstruct the flow of current to the adjacent battery cells 100 when damage occurs due to an abnormal situation in at least one specific battery cell 100 among the plurality of battery cells 100.

Additionally, the filler member 500 may include a material having high specific heat performance. Accordingly, the filler member 500 may increase the thermal mass, and thus it is possible to delay a temperature rise of the battery cells 100 during fast charge/discharge of the battery cells 100, thereby preventing a rapid temperature rise of the battery cells 100.

Additionally, the filler member 500 may include glass bubble. The glass bubble may reduce the specific weight of the filler member 500, and thus increase the energy density compared to the weight.

Additionally, the filler member 500 may include a material having high heat resistance performance. Accordingly, the filler member 500 may effectively prevent thermal runaway to the adjacent battery cells when a thermal event occurs due to overheat in at least one specific battery cell 100 among the plurality of battery cells 100.

Additionally, the filler member 500 may comprise a material having high flame retardant performance. Accordingly, the filler member 500 may minimize fire risks when a thermal event occurs due to overheat in at least one specific battery cell 100 among the plurality of battery cells 100.

In addition to the battery cells 100, the filler member 500 may be filled in the busbar assembly 200. Specifically, the filler member 500 may be filled in the busbar assembly 200 to cover the upper side of the busbar assembly 200.

Here, the filler member 500 may be continuously filled in between the busbar assembly 200 and the battery cells 100 without a break or gap between the busbar assembly 200 and the battery cells 100 in the up-down direction (Z axis direction) of the battery cells 100.

Since the filler member 500 according to this embodiment is continuously filled in the battery cells 100 and the busbar assembly 200 without discontinuity, it is possible to achieve uniform heat distribution in the area between the battery cells 100 and the busbar assembly 200 without imbalance in heat distribution, thereby remarkably improving the cooling performance of the battery pack 1.

Furthermore, the filler member 500 may be filled to cover the area except the outer lateral side of the side structure unit 400. Here, the filler member 500 may be continuously filled in the battery cells 100, the busbar assembly 200 and the side structure unit 400 without discontinuity. Accordingly, it is possible to improve the cooling performance of the battery pack 1.

Hereinafter, the pack case structure formation through the injection of the filler member 500 will be described in more detail.

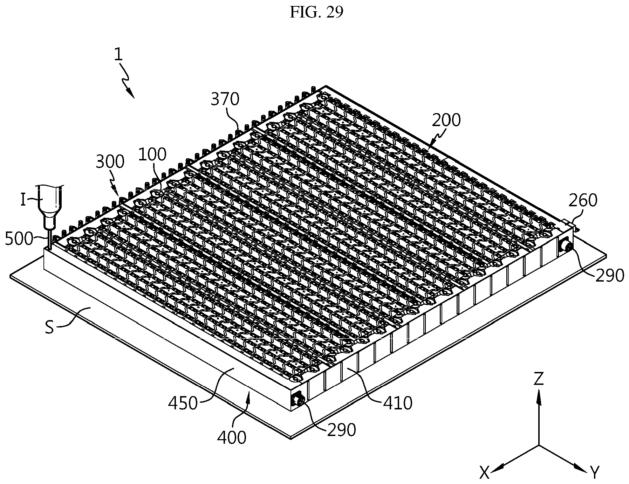

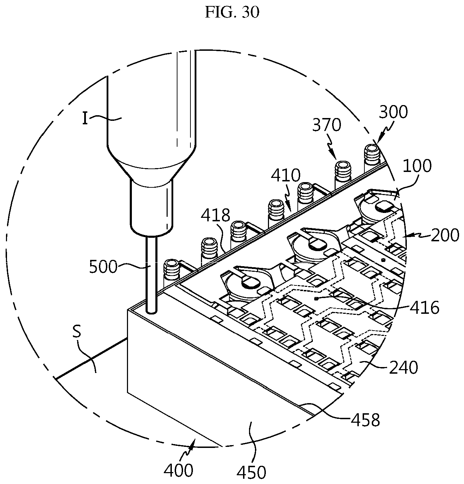

FIGS. 29 to 31 are diagrams illustrating the pack case structure formation through the filler member injection of the battery pack of FIG. 2.

Referring to FIGS. 29 to 31, the manufacturer may form the pack case structure of the upper and lower parts of the battery pack 1 (see FIG. 2) through the filler member 500 comprising the resin material by injecting and coating the filler member 500 comprising the silicone resin through a resin injection device I. Specifically, the filler member 500 may cover the upper side of the busbar assembly 200 at the upper part (+Z axis direction) of the battery pack 1 and cover the bottom of the battery cells 100 at the lower part (-Z axis direction) of the battery pack 1, and may be filled up to a protrusion height h4 of the bottom rib 415. Here, the protrusion height h4 of the bottom rib 415 may be designed with a predetermined height, taking into account the injection amount of the filler member 500.

In the process of injecting and coating the filler member 500 through the resin injection device I, an injection guider S may be disposed below the side structure unit 400 to prevent the resin from leaking downward (-Z axis direction) during the injection of the filler member 500. The injection guider S may be made of Teflon for easy detachment after the filler member 500 is cured.

In the process of injecting and coating the filler member 500, the side structure unit 400 may act as a mold to support the battery cells 100 and the cooling unit 300 together with the injection guider S and prevent resin leaks.

Accordingly, in this embodiment, the side structure unit 400 may eliminate the need for an additional injection guider jig structure in the lateral direction in the process of injecting and coating the filler member 500, thereby reducing the manufacturing cost and remarkably improving the work efficiency.

Furthermore, the side structure unit 400 may guide the placement of the connection busbar unit 230 in position through the busbar guide protrusion 416 that is inserted into the connection busbar unit 230, thereby effectively preventing misposition or misalignment of the connection busbar unit 230 that may occur during the injection of the filler member 500.

Additionally, the guide step 418 and the end guide step 458 on the edge of the upper surface of the side structure unit 400 may increase the accuracy of the injection of the filler member 500, thereby making it easy to inject the filler member 500 enough to cover the busbar assembly 200, and effectively preventing the overflow of the filler member 500.

Here, the side structure unit 400 exposes the components connected to an external device such as the interconnection board 260, the connector terminal 290 and the cooling fluid inlet/outlet 370, to avoid interferences with these components during the injection or coating of the filler member 500.

Accordingly, in this embodiment, since the pack case structure of the battery pack 1 (see FIG. 1) is formed through the side structure unit 400 and the filler member 500, compared to the conventional pack case structure formed as a complex assembly of plates, it is possible to simplify the assembly process of the battery pack 1 and significantly reduce the manufacturing cost, thereby improving the price competitiveness.

Furthermore, in this embodiment, since the pack case structure is formed by the side structure unit 400 and the filler member 500, compared to the conventional pack case structure having a cell frame structure including an assembly of plates, it is possible to reduce the total size of the battery pack 1, thereby significantly increasing the energy density.

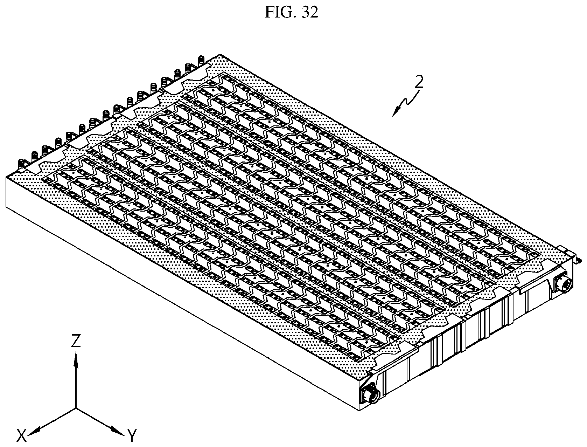

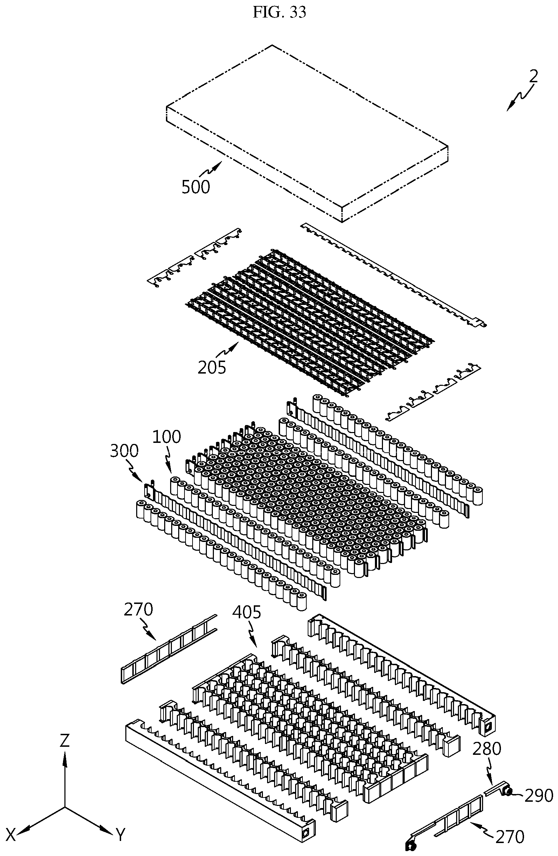

FIG. 32 is a diagram illustrating the battery pack according to another embodiment of the present disclosure, and FIG. 33 is an exploded perspective view of the battery pack of FIG. 32.

The battery pack 2 according to this embodiment is similar to the battery pack 1 of the previous embodiment, and thus some elements that are substantially identical or similar to the previous embodiment are omitted to avoid redundancy, and the following description will be made based on difference(s) between this embodiment and the previous embodiment.

Referring to FIGS. 32 and 33, the battery pack 2 may include the plurality of battery cells 100, the busbar assembly 205, the cooling unit 300, the side structure unit 405 and the filler member 500.

The plurality of battery cells 100, the cooling unit 300 and the filler member 500 are substantially identical or similar to the previous embodiment, and hereinafter, redundant descriptions are omitted.

The busbar assembly 205 will be described in more detail below with reference to the following related drawings.

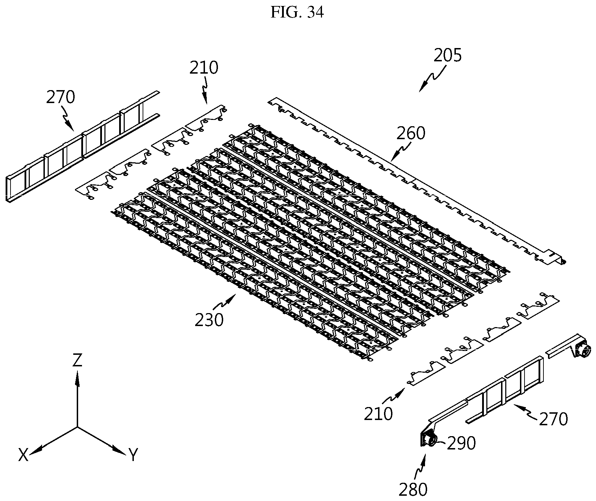

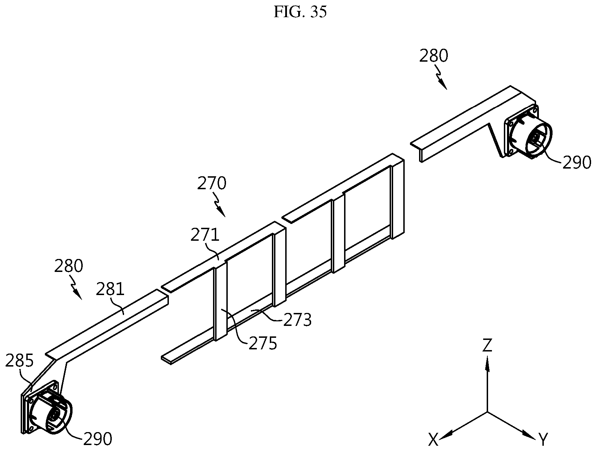

FIG. 34 is a diagram illustrating the busbar assembly of the battery pack of FIG. 33, and FIG. 35 is a diagram illustrating a high voltage busbar unit of the busbar assembly of FIG. 34.

Referring to FIGS. 34 and 35 and FIG. 33, the busbar assembly 205 may include the main busbar unit 210, the connection busbar unit 230, the interconnection board 260, the high voltage busbar units 270, 280 and the connector terminal 290.

The main busbar unit 210, the connection busbar unit 230 and the interconnection board 260 are substantially identical or similar to the previous embodiment, and hereinafter, redundant descriptions are omitted.

The high voltage busbar units 270, 280 may be configured to ensure electrical safety of the busbar assembly 200, and have a larger thickness than the thickness of the main busbar unit 210. For example, in this embodiment, the thickness of the main busbar unit 210 may be 0.4 mm, and the thickness of the high voltage busbar units 270, 280 may be 4 mm which is larger than the thickness of the main busbar unit 210.

The high voltage busbar units 270, 280 may include a high voltage line member 270 and a connector mount member 280.

The high voltage line member 270 may be disposed on the bottom of the main busbar 210, and may have a predetermined length for a stable flow of current. The high voltage line member 270 may be mounted at two ends of the main plate 410 of the side structure unit 405 as described below in the widthwise direction (X axis direction) of the battery pack 2.

Here, the high voltage line member 270 may be seated at the two ends of the main plate 410. Additionally, the high voltage line member 270 may be elastically inserted into the two ends of the main plate 410. That is, the high voltage line member 270 may include a material having a predetermined elasticity. After the high voltage line member 270 is elastically coupled to the two ends 270 of the main plate 410, the pressure may be applied to the two ends of the main plate 410. It is possible to increase the coupling stability between the main plates 410 of the side structure unit 405 by mounting the two ends of the main plate 410 through the high voltage line member 270.

The high voltage line member 270 may include a plurality of high voltage line members 270 according to the number of battery cells 100 or capacity of the battery pack 2. That is, the number of high voltage line members 270 may change depending on the number of battery cells 100 or the capacity.

Hereinafter, the high voltage line member 270 will be described in more detail.

The high voltage line member 270 may include a first high voltage line portion 271, a second high voltage line portion 273 and a connection line portion 275.

The first high voltage line portion 271 may be formed with a predetermined length, and seated on the main plate 410 such that it is disposed on the bottom of the main busbar 210. Here, the first high voltage line portion 271 may be thicker than the main busbar 210, taking the current capacity into account. The first high voltage line portion 271 may be seated on a first line accommodation portion 419a of the main plate 410 as described below.

The second high voltage line portion 273 may be spaced apart from the first high voltage line portion 271 in the heightwise direction (Z axis direction) of the battery pack 2, and seated on the bottom of the main plate 410. The second high voltage line portion 273 may be formed with the equal thickness to the first high voltage line portion 271, and may form a current path together with the first high voltage line portion 271.

The connection line portion 275 may connect the first high voltage line portion 271 to the second high voltage line portion 273, and may be disposed on two sides of the main plate 410 in the heightwise direction (Z axis direction) of the main plate 410. The connection line portion 275 may be integrally formed with the first high voltage line portion 271 and the second high voltage line portion 273, and may form the current path with the first high voltage line portion 271 and the second high voltage line portion 273.

In this embodiment, one of the first high voltage line portion 271 and the second high voltage line portion 273 may include a disconnect portion to allow the current to flow from the first high voltage line portion 271 to the second high voltage line portion 273 or flow in reverse through the connection line portion 275.

The connection line portion 275 may include a plurality of connection line portions 275. The plurality of connection line portions 275 may be arranged spaced a predetermined distance apart from each other in the widthwise direction (X axis direction) of the battery pack 2. Furthermore, the connection line portion 275 may be disposed between the cooling units 300 to prevent interferences with the cooling unit 300 in the widthwise direction (X axis direction) of the battery pack 2.

The connector mount member 280 may include a pair of connector mount members 280. The pair of the connector mount members 280 may be disposed between the high voltage line members 270 and mounted in the pair of end plates 450 (see FIG. 34) of the side structure unit 405 as described below.

The pair of connector mount members 280 may include a high voltage line portion 281 and a connector connection portion 285.

The high voltage line portion 281 may have a predetermined length, and may be seated on the end plate 450 such that it is disposed on the bottom of the main busbar 210. The high voltage line portion 281 may be seated on a connector mount member accommodation portion 459 of the end plate 450 as described below. The upper part of the high voltage line portion 281 may be disposed on the same line as the first high voltage line portion 271 in the widthwise direction (X axis direction) of the battery pack 2.

The connector connection portion 285 may be extended from the high voltage line portion 281, and disposed on the side in the heightwise direction (Z axis direction) of the end plate 450. The connector terminal 290 as described below may be mounted in the connector connection portion 285.

The connector terminal 290 may include a pair of connector terminals 290 and may be connected to the connector mount member 280. Specifically, each of the pair of connector terminals 290 may be mounted in the connector connection portion 285 of each connector mount member 280. The pair of connector terminals 290 connected to the connector mount members 280 may be mounted in the pair of end plates 450 as described below.

In this embodiment, the high voltage busbar units 270, 280 may guide the stable flow of current in the battery pack 2, thereby improving the electrical safety of the battery pack 2 and increasing the efficiency during charging/discharging.

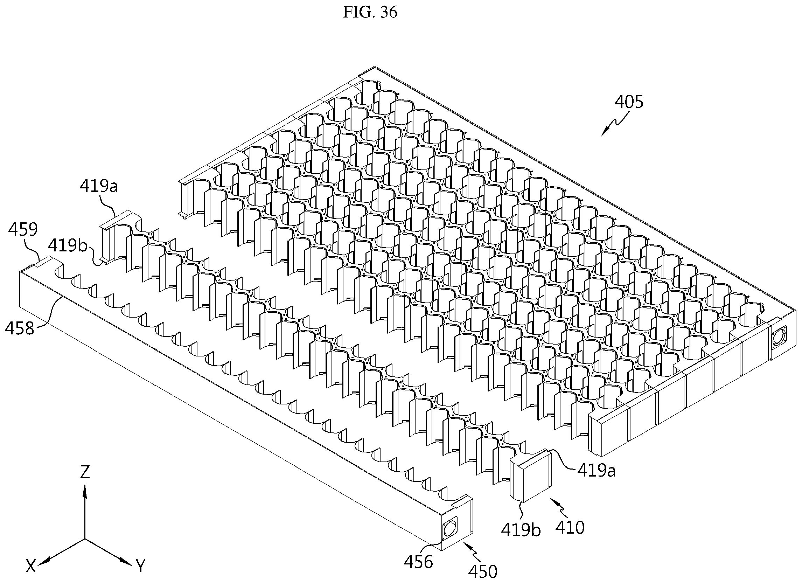

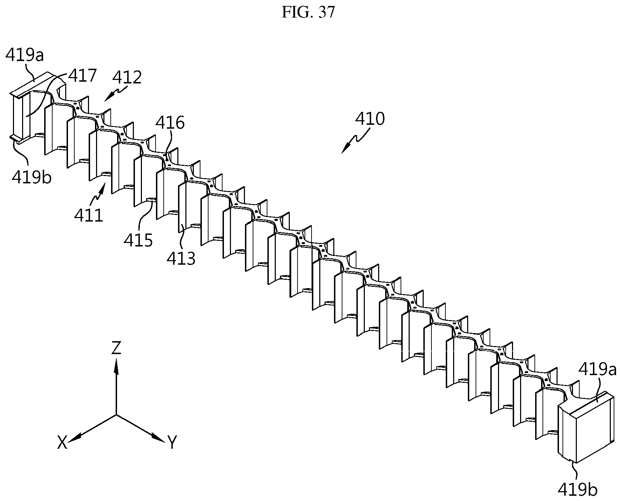

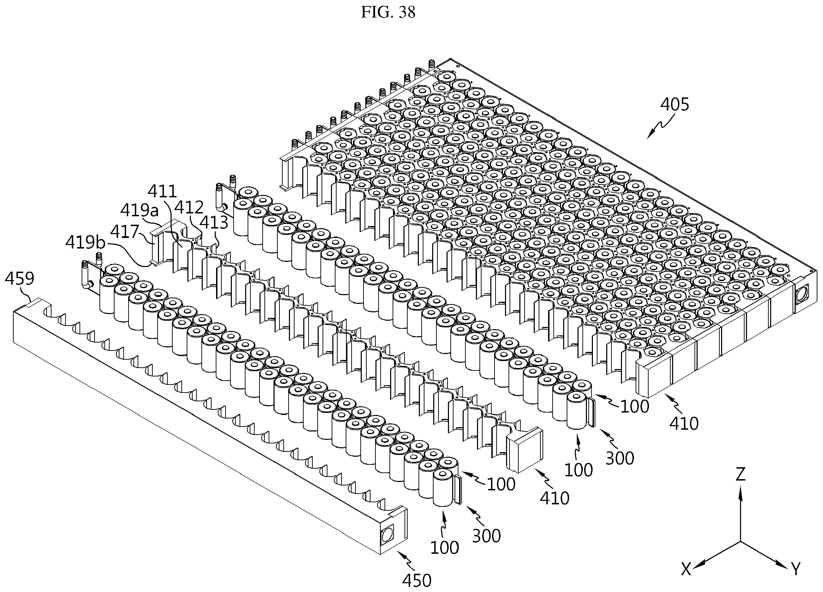

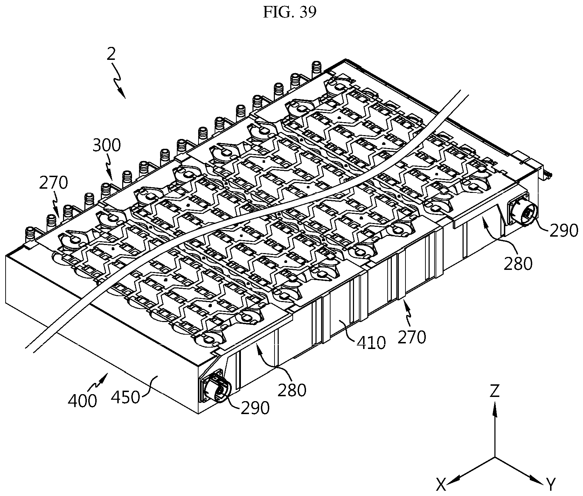

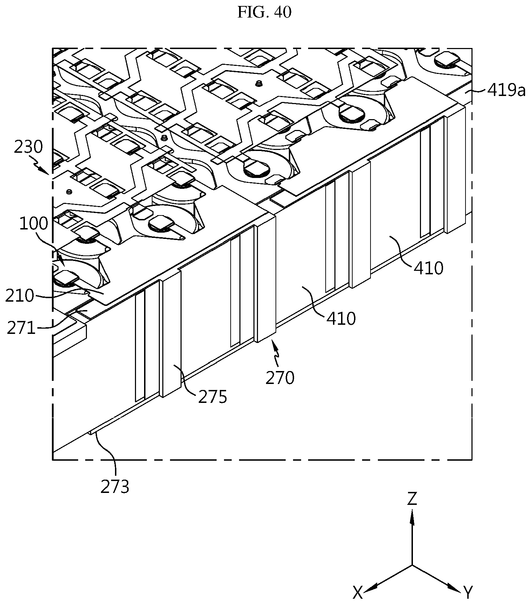

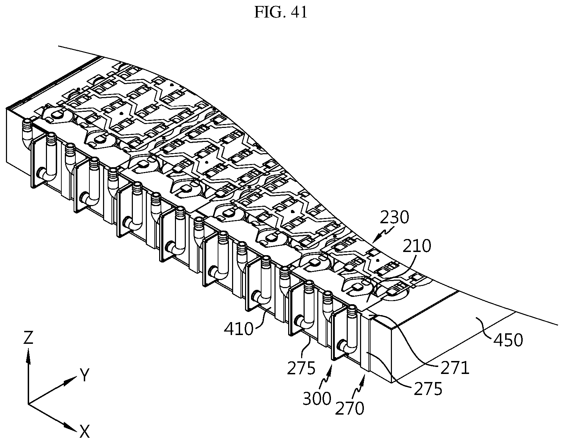

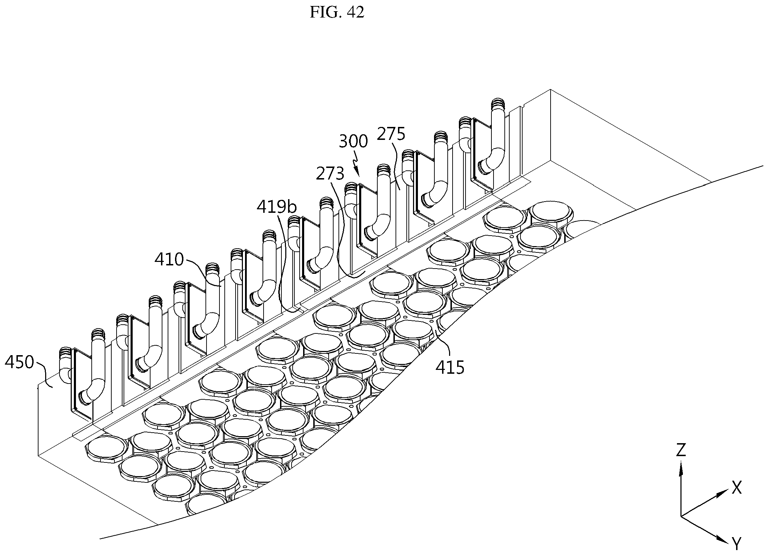

FIG. 36 is a diagram illustrating the side structure unit of the battery pack of FIG. 33, FIG. 37 is a diagram illustrating the main plate of the side structure unit of FIG. 36, FIG. 38 is a diagram illustrating a placement relationship between the battery cells and the cooling units through the side structure unit of FIG. 36, and FIGS. 39 to 42 are diagrams illustrating a mounting structure of the side structure unit and the high voltage busbar unit of FIG. 36.

Referring to FIGS. 36 to 42 and FIG. 33, the side structure unit 405 may include the plurality of main plates 410 and the pair of end plates 450.

Each of the plurality of main plates 410 may include the first cell accommodation portion 411, the second cell accommodation portion 412, the inter-wing 413, the bottom rib 415, the busbar guide protrusion 416, the cooling unit insertion groove 417 and the high voltage line member accommodation portions 419a, 419b.

The first cell accommodation portion 411, the second cell accommodation portion 412, the inter-wing 413, the bottom rib 415, the busbar guide protrusion 416 and the cooling unit insertion groove 417 are substantially identical or similar to the previous embodiment, and hereinafter, redundant descriptions are omitted.

The high voltage line member accommodation portions 419a, 419b may be disposed at two ends in the lengthwise direction (Y axis direction) of the main plate 410. The first high voltage line portion 271 and the second high voltage line portion 273 of the high voltage line member 270 may be seated on the high voltage line member accommodation portions 419a, 419b.

The high voltage line member accommodation portions 419a, 419b may include a first line accommodation portion 419a and a second line accommodation portion 419b.

The first line accommodation portion 419a may accommodate the first high voltage line portion 271, and may be formed at the upper (+Z axis direction) edge of two ends along the lengthwise direction (Y axis direction) of the main plate 410. The first line accommodation portion 419a may be stepped to a predetermined depth to prevent upward (+Z axis direction) protrusion of the battery pack 2 when accommodating the first high voltage line portion 271. Here, the predetermined depth may be at least equal to the thickness of the first high voltage line portion 271.

The second line accommodation portion 419b may accommodate the second high voltage line portion 273, and may be formed at the lower edge (-Z axis direction) of two ends in the lengthwise direction (Y axis direction) of the main plate 410. The second line accommodation portion 419b may be stepped to a predetermined depth to prevent downward protrusion (-Z axis direction) of the battery pack 2 when accommodating the second high voltage line portion 273. Here, the predetermined depth may be at least equal to the thickness of the second high voltage line portion 273.

The pair of end plates 450 may include a terminal hole 456, an end guide step 458 and the connector mount member accommodation portion 459.

The terminal hole 456 and the end guide step 458 are similar to the previous embodiment, and hereinafter, redundant descriptions are omitted.

The connector mount member accommodation portion 459 may accommodate the high voltage line portion 281, and may be formed at the upper edge (+Z axis direction) of two ends in the lengthwise direction (Y axis direction) of the end plate 450. The connector mount member accommodation portion 459 may be stepped to a predetermined depth to prevent upward protrusion (+Z axis direction) of the battery pack 2 when accommodating the high voltage line portion 281. Here, the predetermined depth may be at least equal to the thickness of the high voltage line portion 281.

Furthermore, the connector mount member accommodation portion 459 may accommodate a part of the first high voltage line portion 271 seated on the first line accommodation portion 419a of the main plate 410 adjacent to the end plate 450 on the opposite side where the connector terminal 290 is disposed. To this end, the connector mount member accommodation portion 459 may be disposed on the same line as the first line accommodation portion 419a in the widthwise direction (X axis direction) of the battery pack 2.

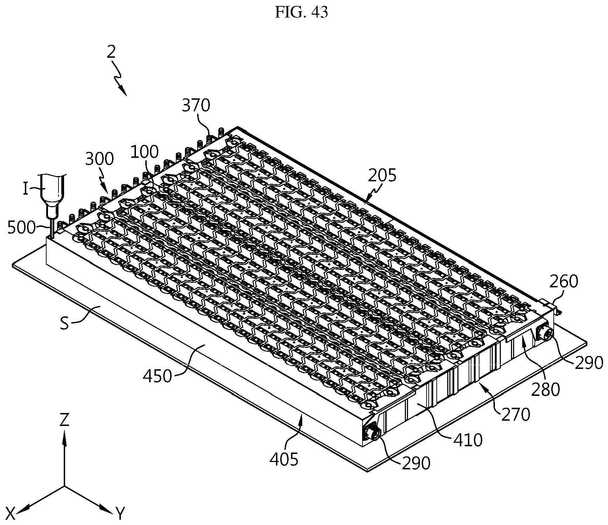

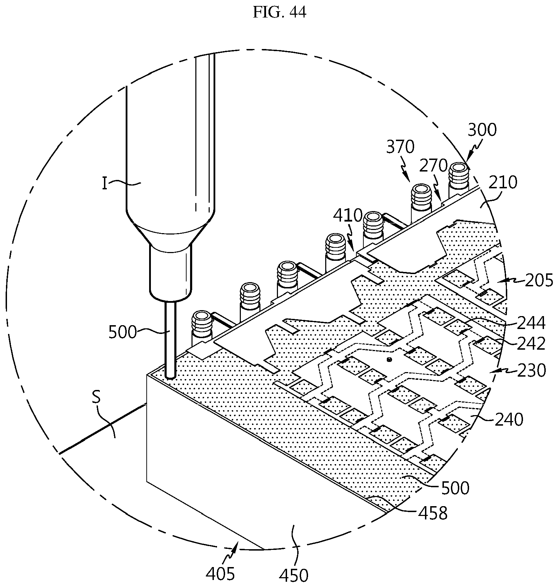

FIGS. 43 and 44 are diagrams illustrating the filler member injection of the battery pack of FIG. 32.

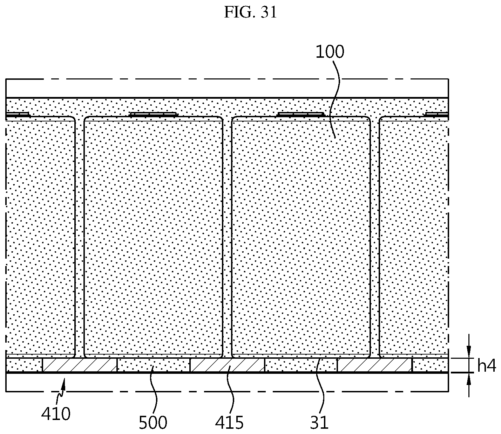

Referring to FIGS. 43 and 44, the manufacturer may form the pack case structure of the upper and lower parts of the battery pack 2 (see FIG. 31) by injecting and coating the filler member 500 comprising the silicone resin through the resin injection device I and the injection guider S.

In this embodiment, the filler member 500 may be filled to cover parts of the main busbar 210 and the connection busbar 230 of the busbar assembly 200 at the upper part of the battery pack 2 (+Z axis direction).

Here, the filler member 500 may be filled to cover only the electrode connection part with the battery cells 100 electrically connected to the main busbar 210 and the connection busbar 230 on the main busbar 210 and the connection busbar 230 (+Z axis direction) seated on the side structure unit 400 (+Z axis direction). That is, the filler member 500 may be filled to a sufficient height to cover only the electrode connection part bent downward (-Z axis direction) for the electrical connection in the main busbar 210 and the connection busbar 230.

Specifically, the filler member 500 may be filled to cover only the positive busbar hole 242 and the negative busbar hole 244 of the connection busbar 230. More specifically, the filler member 500 may be filled to the same level as the horizontal part of the main busbar 210 and the horizontal part of the busbar cover 240. Accordingly, after the filling of the filler member 500 is completed, the horizontal part of the main busbar 210 and the busbar cover 240 of the connection busbar 230 may be partially exposed on the upper surface (+Z axis direction) of the battery pack 2.

As described above, in this embodiment, since the filler member 500 covers only the electrode connection part of the battery cells 100 electrically connected to the main busbar 210 and the connection busbar 230 of the busbar assembly 200 on the upper surface of the battery pack P (+Z axis direction), it is possible to optimize the coating amount of the filler member 500 comprising the silicone resin and effectively ensure the safety of the electrical connection.

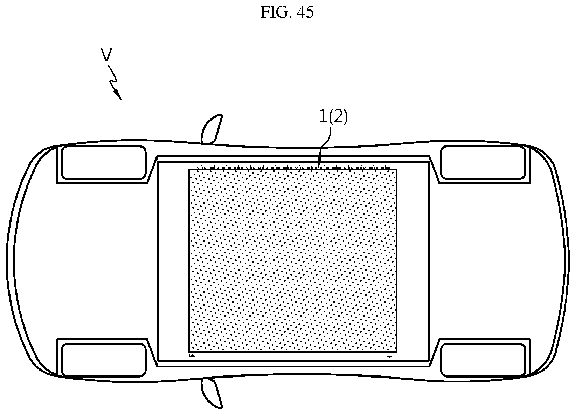

FIG. 45 is a diagram illustrating a vehicle according to an embodiment of the present disclosure.

Referring to FIG. 45, the vehicle V may be an electric vehicle or a hybrid electric vehicle, and may include at least one battery pack 1, 2 of the previous embodiment as an energy source.

In this embodiment, since the above-described battery packs 1, 2 have a compact structure with high energy density, it is easy to form a modularization structure of the plurality of battery packs 1, 2 when mounted in the vehicle 1, and it is possible to ensure a relatively high degree of freedom in mounting in various inner space shapes of the vehicle V. That is, in this embodiment, the at least one battery pack 1, 2 may have the battery pack case structure that is easy to form a modularization structure and has a high degree of freedom of mounting.

Additionally, the lengthwise direction of the at least one battery pack 1, 2 may be perpendicular to the lengthwise direction of the vehicle so that the side structure unit 400 may protect the plurality of battery cells 100 in the event of a front-end or rear-end collision of the vehicle.

According to the various embodiments as described above, it is possible to provide the battery packs 1, 2 with increased energy density and strength and the vehicle V comprising the same.

Additionally, according to the various embodiments as described above, it is possible to provide the battery packs 1, 2 with improved price competitiveness and fabrication efficiency and the vehicle V comprising the same.

Furthermore, according to the various embodiments as described above, it is possible to provide the battery packs 1, 2 with improved cooling performance and the vehicle V comprising the same.

While the exemplary embodiment of the present disclosure has been hereinabove shown and described, the present disclosure is not limited to the above-described particular embodiment, and it is obvious to those skilled in the art to make a variety of modifications to the present disclosure without departing from the claimed subject matter of the present disclosure, and such modifications should not be individually understood from the technical aspect or scope of the present disclosure.

**Claims**

1. A battery pack, comprising:

   a plurality of battery cells;
   a cooling unit disposed between the plurality of battery cells along a lengthwise direction of the battery pack; and
   a side structure unit accommodating the cooling unit and the plurality of battery cells,
   wherein the battery cells, the cooling unit and the side structure unit are arranged at a preset distance ratio for close contact with each other.

2. The battery pack according to claim 1, wherein the side structure unit includes a first cell accommodation portion and a second cell accommodation portion, wherein the first cell accommodation portion and the second cell accommodation portion have a concave shape and are arranged in a staggering manner, and

wherein a distance between centers of the battery cells between the first cell accommodation portion and the second cell accommodation portion is determined according to a thickness of the side structure unit.

3. The battery pack according to claim 1, wherein the cooling unit includes:

   a cooling tube disposed between the plurality of battery cells; and
   a cooling channel disposed in the cooling tube to circulate a cooling fluid for cooling the battery cells, and
   wherein a distance between centers of the adjacent battery cells in contact with one surface of the cooling tube is determined based on a distance between centers of the battery cells disposed opposite with the cooling tube interposed therebetween.

4. The battery pack according to claim 3, wherein the distance between the centers of the battery cells disposed opposite with the cooling tube interposed therebetween is a distance reflecting a thickness of the cooling tube.

5. The battery pack according to claim 3, wherein the distance between the centers of the battery cells between the first cell accommodation portion and the second cell accommodation portion, the distance between the centers of the adjacent battery cells in contact with one surface of the cooling tube and the distance between the centers of the battery cells disposed opposite with the cooling tube interposed therebetween are determined, taking into account a diameter of the battery cells, a thickness of the cooling tube and a contact angle between the battery cell and the cooling tube.

6. The battery pack according to claim 5, wherein the contact angle between the battery cell and the cooling tube is 60°.

7. The battery pack according to claim 2, wherein a minimum thickness of the first cell accommodation portion and the second cell accommodation portion is half of the distance between the battery cells between the first cell accommodation portion and the second cell accommodation portion.

8. The battery pack according to claim 2, wherein a predetermined gap space is formed in the first cell accommodation portion and the second cell accommodation portion upon receiving the battery cells in the first cell accommodation portion and the second cell accommodation portion.

9. The battery pack according to claim 8, wherein the gap space is formed at a remaining area except an innermost area of a concave shape of the first cell accommodation portion and the second cell accommodation portion upon receiving the battery cells in the first cell accommodation portion and the second cell accommodation portion.

10. The battery pack according to claim 9, wherein the battery cells come into contact with an inner surface of the first cell accommodation portion and the second cell accommodation portion only at the innermost area of the concave shape.

11. The battery pack according to claim 8, wherein the gap space is filled with a filler member.

12. A vehicle, comprising:

    the battery pack according to any one of claims 1 to 11,
    wherein a lengthwise direction of the at least one battery pack is perpendicular to a lengthwise direction of the vehicle so that the side structure unit protects the plurality of battery cells in an event of a front-end or rear-end collision of the vehicle.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

17/45

FIG. 17

400

410
100

300
100
410
100

300
100

450

411
412
418
417
413

458

FIG. 18

EP 4 386 938 A1

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

FIG. 36

FIG. 37

FIG. 38

FIG. 39

FIG. 40

FIG. 41

FIG. 42

FIG. 43

FIG. 44

FIG. 45

## INTERNATIONAL SEARCH REPORT

| | International application No. |
|---|---|
| | **PCT/KR2022/019844** |

| A. | CLASSIFICATION OF SUBJECT MATTER |
|---|---|

**H01M 10/613**(2014.01)i; **H01M 10/617**(2014.01)i; **H01M 10/643**(2014.01)i

According to International Patent Classification (IPC) or to both national classification and IPC

| B. | FIELDS SEARCHED |
|---|---|

Minimum documentation searched (classification system followed by classification symbols)

H01M 10/613(2014.01); B60K 6/28(2007.10); H01M 10/625(2014.01); H01M 10/6555(2014.01); H01M 10/658(2014.01); H01M 2/10(2006.01); H01M 50/20(2021.01); H01M 50/50(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 팩(battery pack), 냉각 유닛(cooling unit), 플레이트(plate), 사이드(side)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2009-193961 A (VALEO KLIMASYSTEME GMBH) 27 August 2009 (2009-08-27)<br>See paragraphs [0040]-[0073] and figures 1-12. | 1-2,7-12 |
| Y | | 3-6 |
| Y | CN 105977578 B (HUATING (HEFEI) POWER TECHNOLOGY CO., LTD.) 04 January 2019 (2019-01-04)<br>See paragraphs [0037]-[0042] and figures 2 and 7. | 3-6 |
| A | KR 10-2019-0097231 A (TESLA, INC.) 20 August 2019 (2019-08-20)<br>See claims 1 and 9-11 and figures 3-10. | 1-12 |
| A | KR 10-2021-0021931 A (AMOGREENTECH CO., LTD.) 02 March 2021 (2021-03-02)<br>See claims 1-4 and figures 1-9. | 1-12 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 March 2023** | **03 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 386 938 A1

**INTERNATIONAL SEARCH REPORT**

International application No.

**PCT/KR2022/019844**

**C.    DOCUMENTS CONSIDERED TO BE RELEVANT**

| Category* | Citation of document, with indication, where appropriate, of the relevant passages | Relevant to claim No. |
|---|---|---|
| A | JP 6846689 B2 (PANASONIC INTELLECTUAL PROPERTY MANAGEMENT CO., LTD.) 24 March 2021 (2021-03-24)<br>　　　See claims 1-4 and figures 1-6. | 1-12 |

Form PCT/ISA/210 (second sheet) (July 2022)

66

## INTERNATIONAL SEARCH REPORT
### Information on patent family members

| International application No. |
|---|
| **PCT/KR2022/019844** |

| Patent document cited in search report | | | Publication date (day/month/year) | Patent family member(s) | | | Publication date (day/month/year) |
|---|---|---|---|---|---|---|---|
| JP | 2009-193961 | A | 27 August 2009 | DE | 102008009041 | A1 | 20 August 2009 |
| | | | | EP | 2093818 | A1 | 26 August 2009 |
| | | | | EP | 2093818 | B1 | 18 June 2014 |
| | | | | JP | 5599571 | B2 | 01 October 2014 |
| | | | | US | 2009-0214940 | A1 | 27 August 2009 |
| | | | | US | 8722229 | B2 | 13 May 2014 |
| CN | 105977578 | B | 04 January 2019 | CN | 105977578 | A | 28 September 2016 |
| KR | 10-2019-0097231 | A | 20 August 2019 | CN | 105659430 | A | 08 June 2016 |
| | | | | CN | 105659430 | B | 06 August 2019 |
| | | | | CN | 110140234 | A | 16 August 2019 |
| | | | | CN | 110313100 | A | 08 October 2019 |
| | | | | EP | 3571732 | A1 | 27 November 2019 |
| | | | | EP | 3583654 | A1 | 25 December 2019 |
| | | | | JP | 2016-537799 | A | 01 December 2016 |
| | | | | JP | 2020-508545 | A | 19 March 2020 |
| | | | | JP | 2020-514991 | A | 21 May 2020 |
| | | | | JP | 6374972 | B2 | 15 August 2018 |
| | | | | JP | 6923664 | B2 | 25 August 2021 |
| | | | | JP | 7018951 | B2 | 14 February 2022 |
| | | | | KR | 10-2019-0116483 | A | 14 October 2019 |
| | | | | KR | 10-2021-0076212 | A | 23 June 2021 |
| | | | | KR | 10-2268725 | B1 | 24 June 2021 |
| | | | | KR | 10-2292216 | B1 | 24 August 2021 |
| | | | | US | 10020550 | B2 | 10 July 2018 |
| | | | | US | 10347894 | B2 | 09 July 2019 |
| | | | | US | 11217862 | B2 | 04 January 2022 |
| | | | | US | 2015-0111082 | A1 | 23 April 2015 |
| | | | | US | 2017-0162922 | A1 | 08 June 2017 |
| | | | | US | 2018-0212222 | A1 | 26 July 2018 |
| | | | | US | 2019-0319249 | A1 | 17 October 2019 |
| | | | | US | 9577227 | B2 | 21 February 2017 |
| | | | | WO | 2015-057826 | A1 | 23 April 2015 |
| | | | | WO | 2018-134704 | A1 | 26 July 2018 |
| | | | | WO | 2018-150279 | A1 | 23 August 2018 |
| KR | 10-2021-0021931 | A | 02 March 2021 | CN | 114270599 | A | 01 April 2022 |
| | | | | US | 2022-0302522 | A1 | 22 September 2022 |
| | | | | WO | 2021-034108 | A1 | 25 February 2021 |
| JP | 6846689 | B2 | 24 March 2021 | CN | 109565005 | A | 02 April 2019 |
| | | | | CN | 109565005 | B | 29 March 2022 |
| | | | | US | 11024920 | B2 | 01 June 2021 |
| | | | | US | 2019-0280260 | A1 | 12 September 2019 |
| | | | | WO | 2018-037860 | A1 | 01 March 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020210187839